# EUROPEAN PATENT APPLICATION

(11) **EP 4 653 641 A1**
(43) Date of publication of application: **26.11.2025**
(21) Application number: 24744716.2
(22) Date of filing: 18.01.2024
(51) Int. Cl.: E04G 21/12, B21F 15/06, B65B 13/18, B65B 13/28, E04C 5/18

(54) **REINFORCING BAR BINDING APPARATUS**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023130997
(71) Applicant: MAX CO., LTD., Tokyo 103-8502 (JP)
(72) Inventor: AZAMI, Takanari, Tokyo 103-8502 (JP); KISHI, Kazuhiko, Tokyo 103-8502 (JP)
(74) Representative: Samson & Partner Patentanwälte mbB
(86) International application number: PCT/JP2024/001329
(87) International publication number: WO 2024/154796

(57) **Abstract**

This reinforcing bar binding apparatus comprises a binding part (129) for binding reinforcing bars, a holding part (112) for holding the binding part (129), and an elevating mechanism (113) that lifts and lowers the holding part (112) with respect to a body unit. The elevating mechanism (113) includes a coupling part (119) that is coupled to the holding part (112) and a drive part (127) that moves the coupling part (119). The coupling part (119) has a movable shaft (115), and the holding part (112) has a long hole (111H) engaging with the movable shaft (115). The drive part (127) moves the coupling part (119) in a state where the binding part (129) is in contact with the reinforcing bars and moves the movable shaft (115) relative to the long hole (111H) to thereby release the engagement therebetween.

## Description

### TECHNICAL FIELD

The present invention relates to a reinforcing bar binding device.

### BACKGROUND ART

In the related art, for example, a technique for automating a reinforcing bar binding work of binding, with a wire or the like, an intersecting section where a reinforcing bar extending in a vertical direction and a reinforcing bar extending in a lateral direction intersect with each other has been studied. For example, in the technique disclosed in Patent Literature 1, when a binding machine body (binding mechanism) is moved, a regulating structure regulates a relative displacement of a second fixing section with respect to a first fixing section. Accordingly, a relative position of the binding machine body with respect to a connecting section of a robot body is fixed, and the binding machine body is accurately disposed at a desired position. On the other hand, in a binding process, the restriction by the restricting structure is released. Accordingly, a reaction position deviation absorbing member absorbs a reaction of the binding machine body and a position deviation between a reinforcing bar and the binding machine due to the binding, thereby reducing a load on the robot body.

### CITATION LIST

### PATENT LITERATURE

Patent Literature 1: JP2021-49568A

### SUMMARY OF INVENTION

### TECHNICAL PROBLEM

However, the technique described in Patent Literature 1 has a problem in that it is difficult to stabilize a position of the binding machine body when the binding machine body abuts against the reinforcing bar.

The present invention has been made in consideration of these circumstances, and an object thereof is to provide a reinforcing bar binding device that can accurately dispose a binding mechanism at a desired position and stabilize a position of the binding mechanism when the binding mechanism abuts against a reinforcing bar.

### SOLUTION TO PROBLEM

An aspect of the present disclosure provides a reinforcing bar binding device including: a binding section configured to bind a reinforcing bar; a holding section configured to hold the binding section; and a lifting section configured to raise and lower the holding section with respect to a body section, in which the lifting section includes: a connecting section connected to the holding section; and a driving section configured to move the connecting section, the connecting section includes an engaging section, the holding section includes an engaged section configured to engage with the engaging section, and the driving section moves the connecting section in a state where the binding section abuts against the reinforcing bar, moves the engaging section with respect to the engaged section, and releases engagement of the engaging section with the engaged section.

Another aspect of the present disclosure provides a reinforcing bar binding device including: a binding section configured to bind a reinforcing bar; a holding section configured to hold the binding section; a lifting section configured to raise and lower the holding section with respect to a body section; and an elastic section configured to attenuate a movement speed of the holding section in a lowering direction, in which the elastic section attenuates the movement speed of the holding section in the lowering direction only in a state where the binding section abuts against the reinforcing bar.

Another aspect of the present disclosure provides a reinforcing bar binding device including: a binding section configured to bind a reinforcing bar; a holding section configured to hold the binding section; a connecting section connected to the holding section; and a control section configured to control the holding section and the binding section to be liftable by driving the connecting section, in which the connecting section includes an engaging section configured to engage with the holding section, and the control section is configured to perform a first operation of lowering both the holding section and the engaging section while the holding section and the engaging section are engaged, thereby causing the binding section to contact the reinforcing bar, and a second operation of moving the engaging section relative to the holding section to release engagement between the holding section and the engaging section in a state where the binding section abuts against the reinforcing bar.

### ADVANTAGEOUS EFFECTS OF INVENTION

According to the present disclosure, a binding mechanism can be accurately disposed at a desired position and a position of the binding mechanism when the binding mechanism abuts against a reinforcing bar can be stabilized.

### BRIEF DESCRIPTION OF DRAWINGS

[FIG. 1] FIG. 1 is an overall perspective view of a reinforcing bar binding robot 100 which is an embodiment of the present disclosure, as viewed obliquely from an upward direction.
[FIG. 2] FIG. 2 is an overall perspective view of the reinforcing bar binding robot which is the embodiment of the present disclosure, as viewed obliquely from a downward direction.
[FIG. 3] FIG. 3 is a plan view of the reinforcing bar binding robot 100, as viewed from the upward direction (above in a Z direction).
[FIG. 4] FIG. 4 is a plan view of the reinforcing bar binding robot 100, as viewed from the downward direction (below in the Z direction).
[FIG. 5] FIG. 5 is a perspective view of the reinforcing bar binding robot 100 with a reinforcing bar binding unit 110 removed, as viewed obliquely from the upward direction.
[FIG. 6] FIG. 6 is a perspective view of the reinforcing bar binding robot 100 with the reinforcing bar binding unit 110 removed, as viewed obliquely from the upward direction.
[FIG. 7] FIG. 7 is a diagram illustrating a functional block configuration of the reinforcing bar binding robot 100.
[FIG. 8] FIG. 8 is a diagram of the reinforcing bar binding robot 100 being traveling along first reinforcing bars R10, as viewed from a Y direction.
[FIG. 9] FIG. 9 is a diagram of the reinforcing bar binding robot 100 being traveling along the first reinforcing bars R10, as viewed from an X direction.
[FIG. 10] FIG. 10 is a diagram of the reinforcing bar binding robot 100 that stops traveling and performs a binding work, as viewed from the Y direction.
[FIG. 11] FIG. 11 is a diagram of the reinforcing bar binding robot 100 that performs the binding work, as viewed from the X direction.
[FIG. 12] FIG. 12 is a diagram of the reinforcing bar binding robot 100 that performs the binding work, as viewed from below in the Z direction.
[FIG. 13A] FIG. 13A is a diagram illustrating an operation of the reinforcing bar binding robot 100.
[FIG. 13B] FIG. 13B is a diagram illustrating an operation of the reinforcing bar binding robot 100.
[FIG. 13C] FIG. 13C is a diagram illustrating an operation of the reinforcing bar binding robot 100.
[FIG. 14A] FIG. 14A is a diagram illustrating an operation of the reinforcing bar binding robot 100.
[FIG. 14B] FIG. 14B is a diagram illustrating an operation of the reinforcing bar binding robot 100.
[FIG. 14C] FIG. 14C is a diagram illustrating an operation of the reinforcing bar binding robot 100.
[FIG. 15A] FIG. 15A is a diagram illustrating an operation of the reinforcing bar binding robot 100.
[FIG. 15B] FIG. 15B is a diagram illustrating an operation of the reinforcing bar binding robot 100.
[FIG. 15C] FIG. 15C is a diagram illustrating an operation of the reinforcing bar binding robot 100.
[FIG. 16] FIG. 16 is a diagram showing a modification of the reinforcing bar binding robot 100 which is the embodiment of the present disclosure.

### DESCRIPTION OF EMBODIMENTS

Hereinafter, the present embodiment will be described with reference to the accompanying drawings. To facilitate understanding of the description, the same elements in the drawings are denoted by the same reference numerals as much as possible, and redundant descriptions will be omitted.

Hereinafter, a configuration of a binding device 100 according to the embodiment of the present disclosure will be described. In the present embodiment, the binding device is a reinforcing bar binding device that binds a plurality of reinforcing bars arranged to intersect with each other, and may be a reinforcing bar binding robot, for example. Hereinafter, a case where the binding device 100 is a reinforcing bar binding robot will be described, and the binding device 100 will also be referred to as a reinforcing bar binding robot 100. In the drawings, an X axis, a Y axis, and a Z axis may be shown. The X axis, the Y axis, and the Z axis constitute a right-handed three-dimensional orthogonal coordinate system. Hereinafter, an arrow direction of the X axis may be referred to as an X axis forward direction, a +X direction, a right side in an X direction, or an X axis right side, and a direction opposite to the arrow direction may be referred to as an X axis rearward direction, a -X direction, a left side in the X direction, or an X axis left side. The same applies to other axes. A Z axis forward direction and a Z axis rearward direction may be referred to as an "upper side" or "above" and a "lower side" or "below", respectively. A plane orthogonal to each of the X axis, the Y axis, and the Z axis may be referred to as a YZ plane, a ZX plane, and an XY plane. These directions and the like are used for convenience in describing relative positional relationships. Accordingly, these directions and the like do not define absolute positional relationships.

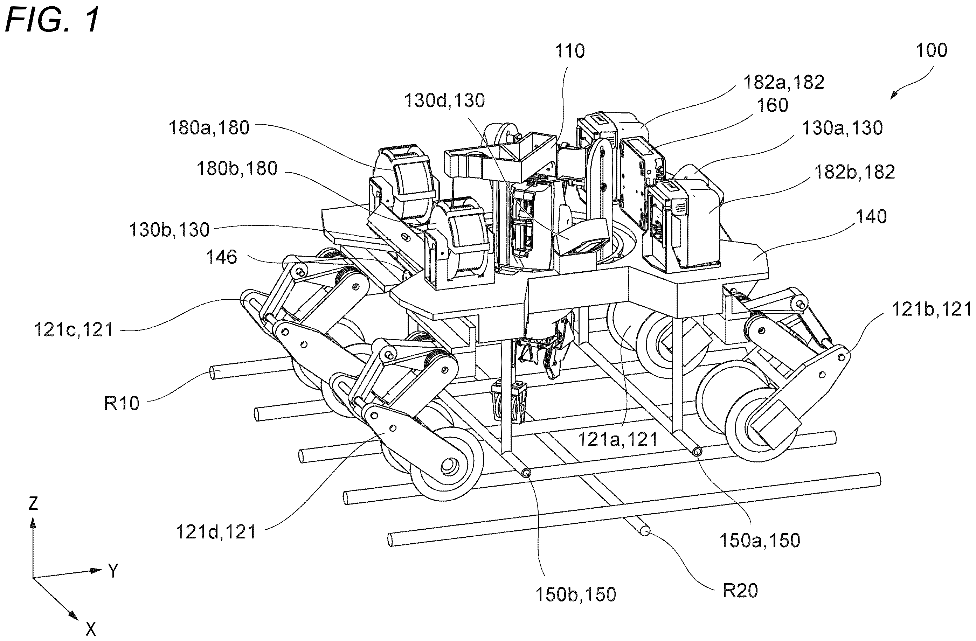

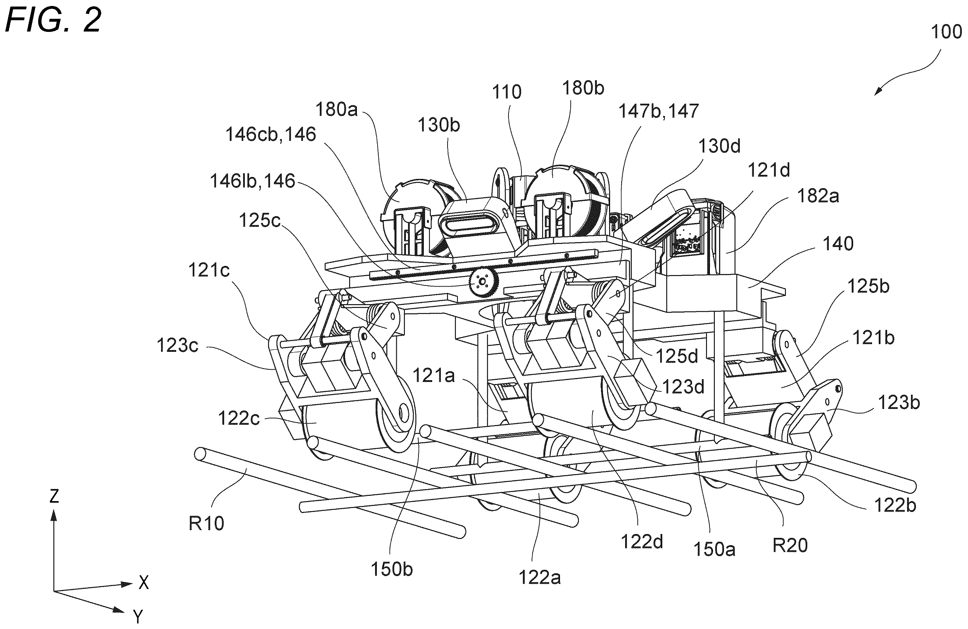

FIG. 1 is an overall perspective view of a reinforcing bar binding robot 100 which is an embodiment of the present disclosure, as viewed obliquely from an upward direction. FIG. 2 is an overall perspective view of the reinforcing bar binding robot which is the embodiment of the present disclosure, as viewed obliquely from a downward direction. As shown in FIGS. 1 and 2, the reinforcing bar binding robot 100 according to the embodiment of the present disclosure includes a reinforcing bar binding unit 110, a traveling unit 121, and a sensor unit 130. The reinforcing bar binding robot 100 may further include other components such as a body unit 140, support bars 150, a control unit 160, reels 180 (a first reel 180a and a second reel 180b), a battery 182 (a first battery 182a and a second battery 182b), a lateral movement unit 146, and a storage device 198 (not shown).

FIGS. 1 and 2 also show a reinforcing bar group R including a plurality of reinforcing bars R10 (also referred to as "first reinforcing bars" or "vertical reinforcing bars" in the present embodiment) extending in a Y direction. As shown in FIGS. 1 and 2, the reinforcing bar binding robot 100 is disposed on the reinforcing bar group R to travel along the first reinforcing bars R10. The reinforcing bar group R may include a plurality of reinforcing bars extending in the X direction (also referred to as "second reinforcing bars R20" or "lateral reinforcing bars" in the present embodiment) in addition to the plurality of reinforcing bars R10.

In the embodiment of the present disclosure, the first reinforcing bars R10 are disposed such that a first direction, which is an extension direction of the first reinforcing bars R10, is parallel to the Y direction. Further, the second reinforcing bars R20 are disposed such that a second direction, which is an extension direction of the second reinforcing bars R20, is parallel to the X direction. Therefore, in the exemplary embodiment of the present disclosure, the first reinforcing bars R10 and the second reinforcing bars R20 are arranged to be orthogonal to each other. Further, the first reinforcing bars R10 and the second reinforcing bars R20 are arranged such that a surface formed by the first reinforcing bars R10 and the second reinforcing bars R20 (also referred to as a "reinforcing bar surface" in the present embodiment) is parallel to the XY plane. Therefore, the surface formed by the first reinforcing bars R10 and the second reinforcing bars R20 is a horizontal surface in the present embodiment. The arrangement of the first reinforcing bars R10 and the second reinforcing bars R20 is not limited thereto. For example, the first reinforcing bars R10 and the second reinforcing bars R20 may be arranged not to be orthogonal to each other. For example, the first reinforcing bars R10 and the second reinforcing bars R20 may be disposed such that an angle between the first reinforcing bars R10 and the second reinforcing bars R20 is, for example, 30°, 45°, 60°, or another degree. In the embodiment of the present disclosure, the first reinforcing bars R10 and the second reinforcing bars R20 are arranged to be orthogonal to each other, but for example, the first reinforcing bars R10 and the second reinforcing bars R20 do not have to be orthogonal to each other depending on intersecting points, and may be arranged to form an angle of, for example, 85° or more and less than 90°.

The first reinforcing bars R10 and the second reinforcing bars R20 may have a finite length, and the plurality of first reinforcing bars R10 or the plurality of second reinforcing bars R20 may be connected via seams in the first direction or the second direction. Furthermore, the first reinforcing bar R10 and the second reinforcing bar R20 may have ends.

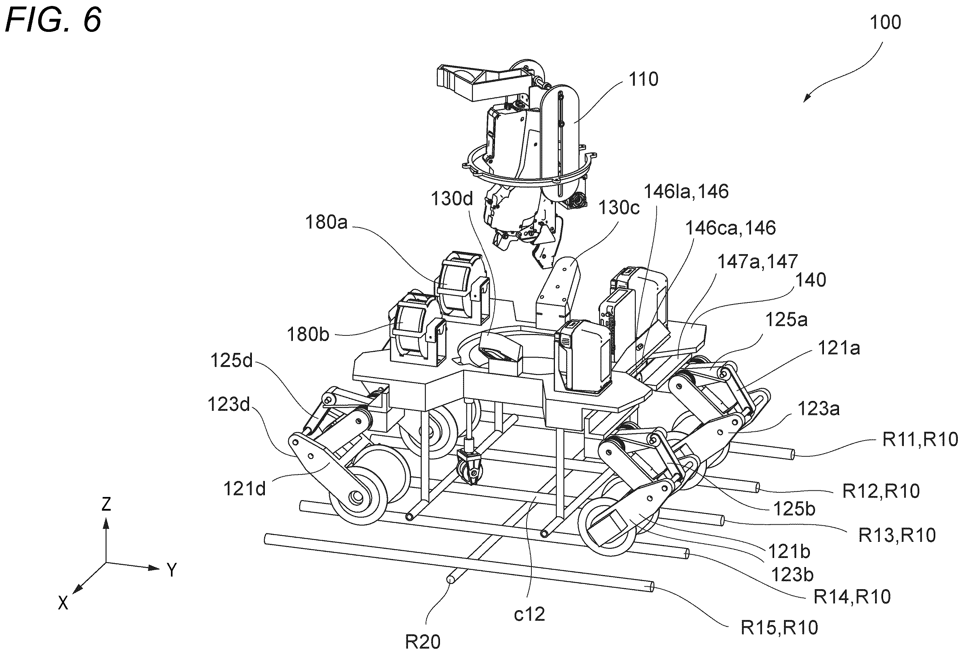

The reinforcing bar binding unit 110 is configured to bind an intersecting point c12 (FIG. 6) of the first reinforcing bar R10 and the second reinforcing bar R20. A binding operation on the intersecting point c12 of the first reinforcing bar R10 and the second reinforcing bar R20 performed by the reinforcing bar binding unit 110 will be described in detail later.

As shown in FIGS. 1 and 2, the traveling unit 121 may include four traveling units 121a, 121b, 121c, and 121d (in the present embodiment, also referred to as a "first traveling unit", a "second traveling unit", a "third traveling unit", and a "fourth traveling unit", respectively). In the embodiment of the present disclosure, the traveling unit 121 is disposed on the reinforcing bar group R such that the reinforcing bar binding robot 100 travels in the Y direction. The first traveling unit 121a, the second traveling unit 121b, the third traveling unit 121c, and the fourth traveling unit 121d include a first roller section 122a, a second roller section 122b, a third roller section 122c, and a fourth roller section 122d, respectively, and the first roller section 122a, the second roller section 122b, the third roller section 122c, and the fourth roller section 122d are configured to travel on any first reinforcing bar R10 of the plurality of first reinforcing bars R10 along the Y direction (first direction) that is the extension direction of the first reinforcing bars R10.

In the present embodiment, the traveling unit 121 is an example of a movement unit (movement unit 120 described below). Instead of the traveling unit 121 or in addition to the traveling unit 121, the movement unit 120 may have a configuration of a movement unit other than the traveling unit 121.

In the embodiment of the present disclosure, a case where the first traveling unit 121a, the second traveling unit 121b, the third traveling unit 121c, and the fourth traveling unit 121d are configured to travel in the Y direction will be described as an example, but the first traveling unit 121a, the second traveling unit 121b, the third traveling unit 121c, and the fourth traveling unit 121d may be configured to travel in a direction other than the Y direction. For example, the reinforcing bar binding robot 100 may travel in a direction at an angle of several degrees to several tens of degrees from the Y direction, and for example, even when an orientation of the reinforcing bar binding robot 100 is inclined due to presence of a foreign matter on the traveled first reinforcing bar R10, the reinforcing bar binding robot 100 travels to substantially follow the first reinforcing bar R10, so that the binding operation on the intersecting point c12 of the first reinforcing bar R10 and the second reinforcing bar R20 by the reinforcing bar binding unit 110 of the reinforcing bar binding robot 100 can be executed. For example, even at a construction site where the first reinforcing bars R10 are arranged to draw a curve, the first traveling unit 121a, the second traveling unit 121b, the third traveling unit 121c, and the fourth traveling unit 121d may be configured to travel to draw a curve to follow the curved first reinforcing bars R10, and in this case, the first direction that is the extension direction of the first reinforcing bars R10 may be different for each point constituting the curve.

As shown in FIGS. 1 and 2 and FIG. 3 described later, the sensor unit 130 includes a sensor 130a, a sensor 130b, a sensor 130c, and a sensor 130d (in the present embodiment, also referred to as a "first sensor", a "second sensor", a "third sensor", and a "fourth sensor", respectively). The first sensor 130a and the second sensor 130b are disposed apart from each other along the Y direction in FIGS. 1 and 2 (in the present embodiment, a direction where a straight line connecting the first sensor 130a and the second sensor 130b extends is also referred to as a "third direction"). The fourth sensor 130d is disposed on a side surface of the reinforcing bar binding robot 100 opposite to a side surface on which the third sensor 130c is provided (a side surface on a back side of the paper surface in FIGS. 1 and 2), and the third sensor 130c and the fourth sensor 130d are disposed apart from each other along a direction intersecting with the Y direction in FIGS. 1 and 2 (the X direction in the example shown in FIGS. 1 and 2, and the extension direction of the straight line connecting the third sensor 130c and the fourth sensor 130d in the present embodiment are also referred to as a "fourth direction").

The first sensor 130a, the second sensor 130b, the third sensor 130c, and the fourth sensor 130d are configured to detect the first reinforcing bar R10 and/or the second reinforcing bar R20. For example, the first sensor 130a and the second sensor 130b may be configured to detect the first reinforcing bar R10, and the third sensor 130c and the fourth sensor 130d may be configured to detect the second reinforcing bars R20. Alternatively, all of the first sensor 130a, the second sensor 130b, the third sensor 130c, and the fourth sensor 130d may be configured to detect the first reinforcing bars R10 and the second reinforcing bars R20.

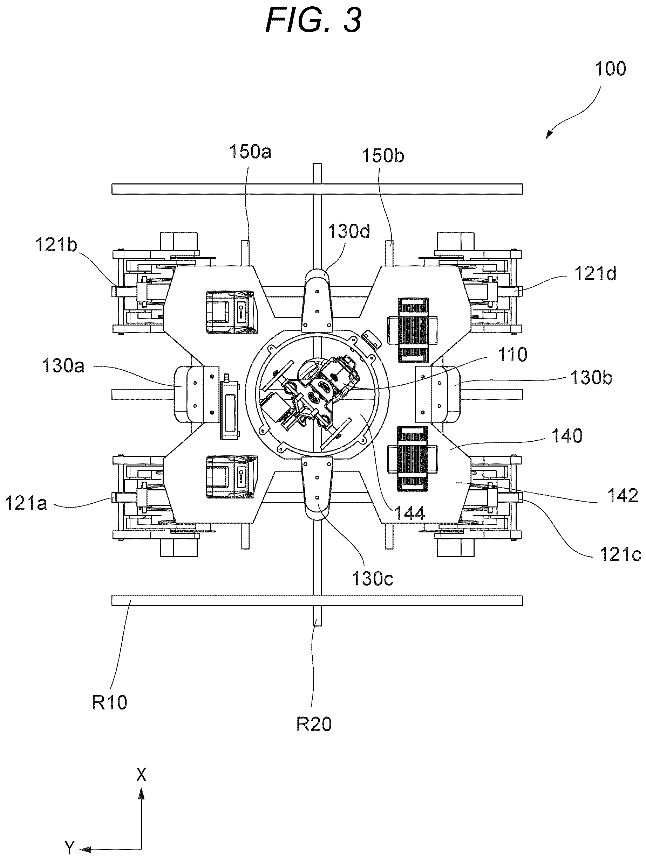

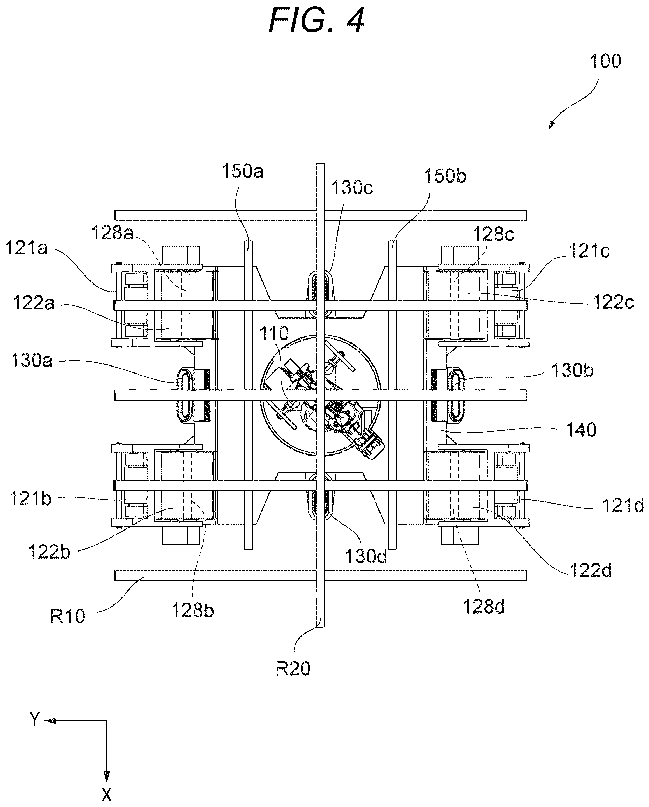

FIG. 3 shows a plan view of the reinforcing bar binding robot 100, as viewed from the upward direction (above in a Z direction). FIG. 4 shows a plan view of the reinforcing bar binding robot 100, as viewed from a downward direction (below in the Z direction).

As can be seen from FIGS. 3 and 4, the first traveling unit 121a and the second traveling unit 121b may be disposed on one side and the other side (a left side and a right side in the X direction in FIG. 3) in the fourth direction (X direction) with respect to the first sensor 130a. The third traveling unit 121c and the fourth traveling unit 121d may be disposed on one side and the other side in the fourth direction (X direction) with respect to the second sensor 130b. In other words, the first sensor 130a may be disposed between the first traveling unit 121a and the second traveling unit 121b in the fourth direction. Similarly, the second sensor 130b may be disposed between the third traveling unit 121c and the fourth traveling unit 121d in the fourth direction.

Further, as shown in FIGS. 3 and 4, the third sensor 130c may be disposed between the first traveling unit 121a and the third traveling unit 121c in the third direction (Y direction in FIGS. 3 and 4), and similarly, the fourth sensor 130d may be disposed between the second traveling unit 121b and the fourth traveling unit 121d in the third direction (Y direction).

For example, a camera constituting the first sensor 130a may be disposed on a straight line passing through a rotation shaft 128a of the first roller section 122a constituting the first traveling unit 121a and a rotation shaft 128b of the second roller section 122b constituting the second traveling unit 121b, or disposed more forward (+Y direction in FIG. 4) than the straight line passing through the rotation shaft 128a and the rotation shaft 128b when viewed from below. Similarly, a camera constituting the second sensor 130b may be disposed on a straight line passing through a rotation shaft 128c of the third roller section 122c constituting the third traveling unit 121c and a rotation shaft 128d of the fourth roller section 122d constituting the fourth traveling unit 121d, or disposed more rearward (-Y direction in FIG. 4) than the straight line passing through the rotation shaft 128c and the rotation shaft 128d when viewed from below.

As shown in FIGS. 3 and 4, the first sensor 130a is disposed in front of the body unit 140 in the Y axis direction (+Y direction). Similarly, the second sensor 130b is disposed behind the body unit 140 in the Y axis direction (-Y direction). The third sensor 130c and the fourth sensor 130d are respectively disposed on a left side and a right side of the body unit 140 in the X direction in the top view in FIG. 3. That is, for example, as can be seen from FIG. 4 and the like, in the present embodiment, the first sensor 130a, the second sensor 130b, the third sensor 130c, and the fourth sensor 130d are disposed on or inside outer edges of a rectangle virtually formed by connecting the vicinity of centers of the first traveling unit 121a, the second traveling unit 121b, the third traveling unit 121c, and the fourth traveling unit 121d in a plan view of the reinforcing bar binding robot 100. Note that the rectangle virtually formed by the first traveling unit 121a to the fourth traveling unit 121d may be a square when, for example, intervals between the traveling units in the X direction and the Y direction are substantially equal, and in this case, the first sensor 130a to the fourth sensor 130d may be disposed on or inside the outer edges of the virtual square. Depending on arrangement configurations of the first traveling unit 121a to the fourth traveling unit 121d, a quadrangle other than a rectangle and a square may be virtually formed by the first traveling unit 121a to the fourth traveling unit 121d, and also in this case, the first sensor 130a to the fourth sensor 130d may be disposed on or inside outer edges of the virtual quadrangle.

As shown in FIGS. 1 and 3, the body unit 140 may include a body upper surface 142. For example, a circular hole 144 may be formed in the vicinity of a center of the body upper surface 142, and the reinforcing bar binding unit 110 may be disposed to penetrate the hole 144.

In the present embodiment, the reinforcing bar binding robot 100 may include, for example, two support bars 150 (a first support bar 150a and a second support bar 150b). The first support bar 150a and the second support bar 150b are bars extending in one direction, and are provided, for example, in parallel to the fourth direction (the X direction in FIGS. 1 to 4). Therefore, in the embodiment of the present disclosure, the first support bar 150a and the second support bar 150b are provided to be parallel to a horizontal direction, for example. As shown in FIGS. 1 to 4, the first support bar 150a and the second support bar 150b may be provided apart from each other in the Y direction (third direction). For example, the first support bar 150a and the second support bar 150b may be configured to support the body unit 140 and the like of the reinforcing bar binding robot 100 when the reinforcing bar binding robot 100 moves in a lateral direction (the X direction in FIGS. 1 to 4, the fourth direction in the reinforcing bar binding robot 100).

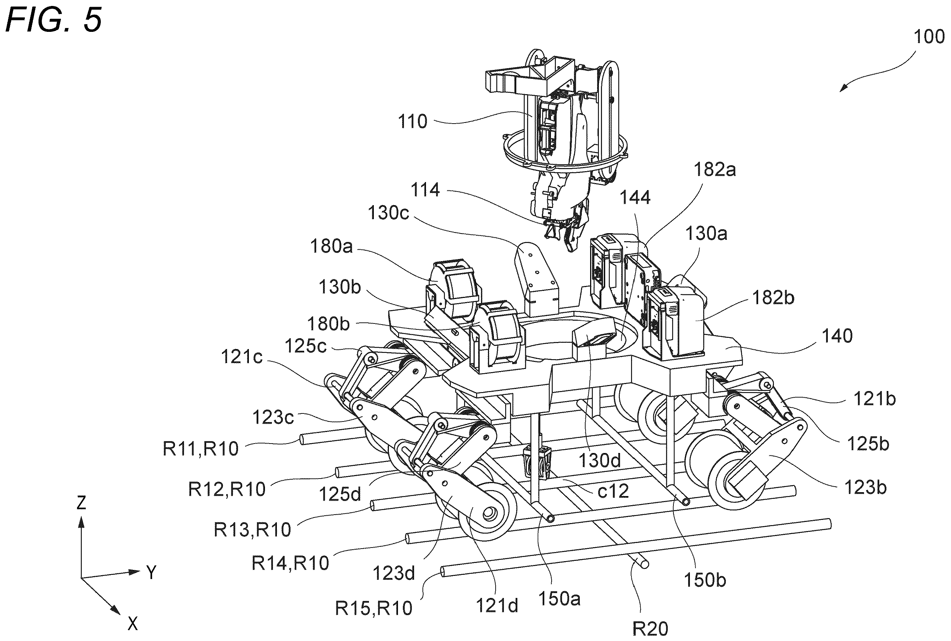

FIG. 5 is a perspective view of the reinforcing bar binding robot 100 with the reinforcing bar binding unit 110 removed, as viewed from obliquely rearward right. FIG. 6 is a perspective view of the reinforcing bar binding robot 100 with the reinforcing bar binding unit 110 removed, as viewed from obliquely forward right. As shown in FIGS. 5 and 6, the reinforcing bar binding unit 110 may be provided to be movable in an up-down direction (Z direction in FIG. 1) while penetrating the hole 144. Accordingly, for example, when the reinforcing bar binding robot 100 reaches the intersecting point c12 of the first reinforcing bar R10 and the second reinforcing bar R20, the reinforcing bar binding unit 110 is lowered, and the intersecting point c12 of the first reinforcing bar R10 and the second reinforcing bar R20 is bound. As shown in FIGS. 5 and 6, the reinforcing bar binding robot 100 has the reels 180a and 180b. A wire used for binding the reinforcing bars is accommodated in the reel 180a and the reel 180b, and when the reinforcing bar binding unit 110 binds the intersecting point c12 of the first reinforcing bar R10 and the second reinforcing bar R20, the wire accommodated in the reel 180a and/or the reel 180b is drawn out to perform binding at the intersecting point c12. Although the detailed description is omitted, at one end (a lower end in the Z direction in FIG. 5) of the reinforcing bar binding unit 110, the reinforcing bar binding unit 110 is provided with a wire twisting section 114 (FIG. 5) having a wire guide and the like and configured to perform a reinforcing bar binding work. The reinforcing bar binding work of the wire twisting section 114 may be implemented by, for example, a function same as that of a well-known reinforcing bar binding machine.

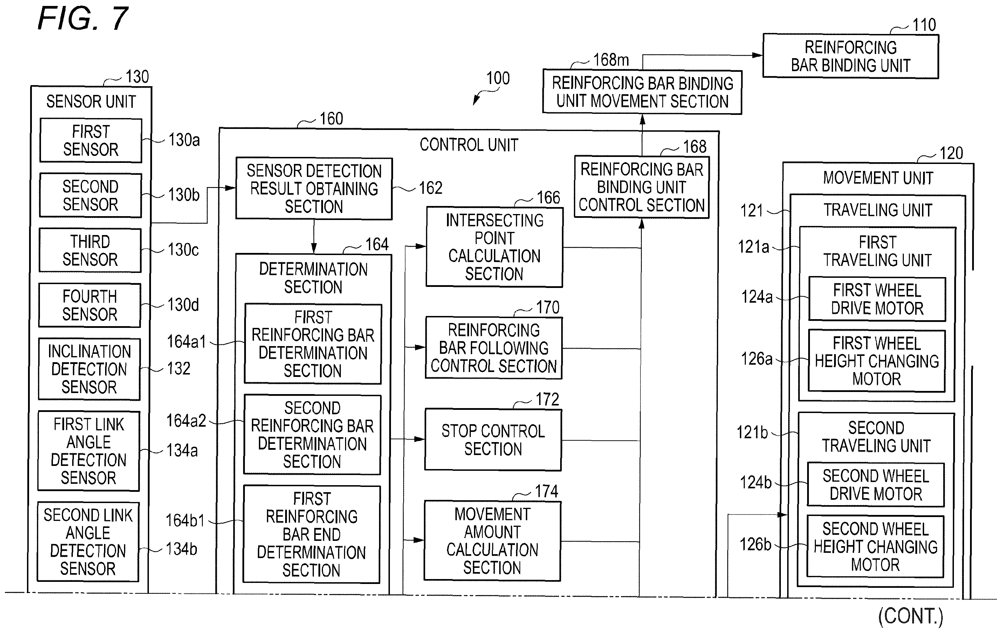

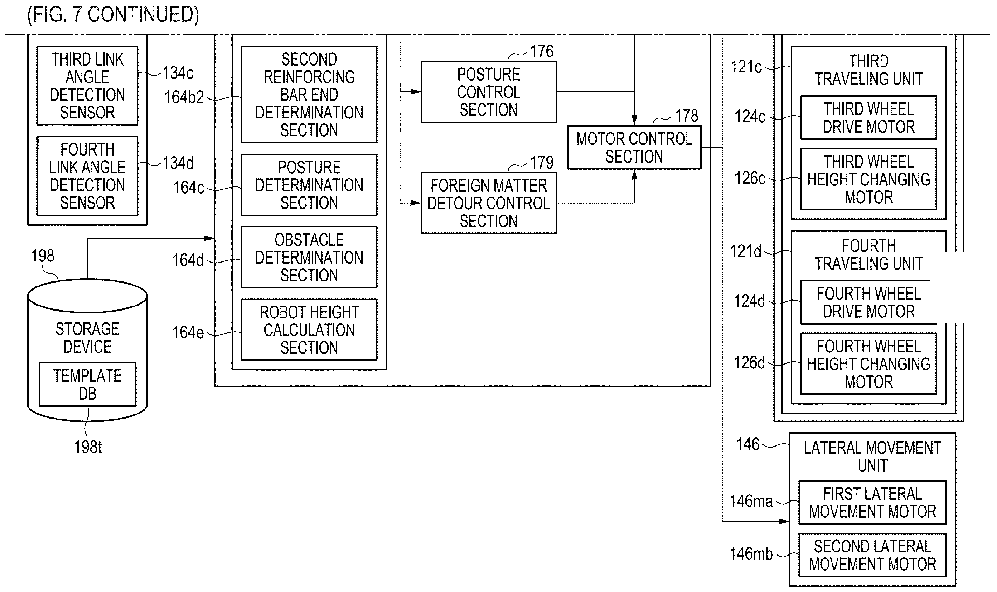

FIG. 7 is a diagram illustrating a functional block configuration of the reinforcing bar binding robot 100. As shown in FIG. 7, the reinforcing bar binding robot 100 may include the control unit 160, the lateral movement unit 146, and the storage device 198 in addition to the configurations of the reinforcing bar binding unit 110, the traveling unit 121, the sensor unit 130, and the like described above.

The control unit 160 is configured to control movement and the binding work performed by the reinforcing bar binding robot 100. The control unit 160 may include a sensor detection result obtaining section 162, a determination section 164, an intersecting point calculation section 166 (also referred to as an "intersecting point estimation section" or an "intersecting point estimation unit" in the present embodiment), a reinforcing bar binding unit control section 168, a reinforcing bar following control section 170, a stop control section 172, a movement amount calculation section 174, a posture control section 176, a motor control section 178, and a foreign matter detour control section 179.

In the reinforcing bar binding robot 100 of the present embodiment, as shown in FIG. 1, the control unit 160 is disposed on a side opposite to the reel 180a and the reel 180b with respect to the reinforcing bar binding unit 110 in the Y direction. More specifically, as shown in FIG. 1, the reel 180a and the reel 180b are disposed in the -Y direction of the reinforcing bar binding unit 110, whereas the control unit 160 is disposed in the +Y direction of the reinforcing bar binding unit 110. In particular, immediately after replacement, the reel wound with the wire becomes heavier, but by disposing the control unit 160 on the side opposite to the reinforcing bar binding unit 110, it is possible to balance the weight.

The lateral movement unit 146 (FIG. 7) is configured to control movement of the body unit 140 of the reinforcing bar binding robot 100. In the reinforcing bar binding robot 100 according to the embodiment of the present disclosure, the reinforcing bar binding robot 100 may be moved in the horizontal direction by the lateral movement unit 146. The lateral movement unit 146 may include a first lateral movement motor 146a and a second lateral movement motor 146b, and for example, when the reinforcing bar binding robot 100 is in lateral movement described later, the body unit 140 may be horizontally moved by the two motors 146a and 146b.

The storage device 198 may include, for example, a storage medium (for example, a semiconductor memory device) or other media for non-transitorily storing one or more computer programs executed in the control unit 160, data used to control the reinforcing bar binding robot 100, and the like. The storage device 198 may include, for example, a template database 198t. For example, as will be described later, the template database 198t may store a template image used when detecting the first reinforcing bar R10 and/or the second reinforcing bar R20 and an end of the first reinforcing bar R10 and/or an end of the second reinforcing bar R20 by using template matching based on the detection result of the sensor unit 130, and may store data obtained by performing image processing such as frequency analysis on the template image, and the like. The control unit 160 may further include a template data creation section, and for example, may be configured to create template data based on an image captured by the sensor unit 130 according to a site subjected to the reinforcing bar binding work, and to store the template data in the template database 198t. The template data stored in the template database 198t may be accumulated, for example, at a timing when new template data is created, or may be deleted at a timing when the binding work at the construction site is completed. Alternatively, the created template data may be configured to be retained in the template database 198t of the storage device 198 for a certain period of time and then deleted, for example, periodically.

The sensor detection result obtaining section 162 obtains the detection result of the sensor unit 130. For example, detection results of the first sensor 130a, the second sensor 130b, the third sensor 130c, and/or the fourth sensor 130d of the sensor unit 130 may be used for the determination on positions of the first reinforcing bar R10 and/or the second reinforcing bar R20 by a first reinforcing bar determination section 164a1 and/or a second reinforcing bar determination section 164a2 of the determination section 164 described later. The detection results of the first sensor 130a, the second sensor 130b, the third sensor 130c, and/or the fourth sensor 130d may be used for the determination on positions of the end of the first reinforcing bar R10 and/or the end of the second reinforcing bar R20 by a first reinforcing bar end determination section 164b1 and/or a second reinforcing bar end determination section 164b2 of the determination section 164.

The determination section 164 may include the first reinforcing bar determination section 164a1, the second reinforcing bar determination section 164a2, the first reinforcing bar end determination section 164b1, the second reinforcing bar end determination section 164b2, a posture determination section 164c, an obstacle determination section 164d, and a robot height calculation section 164e. The first reinforcing bar determination section 164a1 and the second reinforcing bar determination section 164a2 determine the positions of the first reinforcing bar R10 and/or the second reinforcing bar R20 by using, for example, the detection results obtained from the sensor detection result obtaining section 162, including the first sensor 130a, the second sensor 130b, the third sensor 130c, and/or the fourth sensor 130d. As will be described later, the first reinforcing bar determination section 164a1 and the second reinforcing bar determination section 164a2 may determine the positions of the first reinforcing bar R10 and/or the second reinforcing bar R20 by performing the template matching based on captured images that are the detection results of the first sensor 130a to the fourth sensor 130d.

The first reinforcing bar end determination section 164b1 and the second reinforcing bar end determination section 164b2 determine, for example, an end R10e of the first reinforcing bar R10 and/or an end R20e of the second reinforcing bar R20 by using, for example, the detection results obtained from the first sensor 130a, the second sensor 130b, the third sensor 130c, and/or the fourth sensor 130d via the sensor detection result obtaining section 162. Similarly to the first reinforcing bar determination section 164a1 and the second reinforcing bar determination section 164a2, the first reinforcing bar end determination section 164b1 and the second reinforcing bar end determination section 164b2 may also determine positions of the end R10e of the first reinforcing bar R10 and/or the end R20e of the second reinforcing bar R20 based on the template matching.

For example, the robot height calculation section 164e may calculate a height of the reinforcing bar binding robot 100 from the reinforcing bar group R based on the detection results of the first sensor 130a, the second sensor 130b, the third sensor 130c, and/or the fourth sensor 130d. For example, when images of the first reinforcing bar R10 and/or the second reinforcing bar R20 are captured by the first sensor 130a, the second sensor 130b, the third sensor 130c, and/or the fourth sensor 130d (for example, when an image of a range including the first reinforcing bar R10 and/or the second reinforcing bar R20 is captured), the robot height calculation section 164e may calculate the height of the reinforcing bar binding robot 100 from the reinforcing bar group R by calculating a distance of the reinforcing bar binding robot 100 from the reinforcing bar group R based on a relative size of the first reinforcing bar R10 and/or the second reinforcing bar R20 in the captured images of the first reinforcing bar R10 and/or the second reinforcing bar R20.

The height of the reinforcing bar binding robot 100 from the reinforcing bar group R may be calculated based on, for example, an angle of the traveling unit 121. As shown in FIG. 6, the traveling unit 121a may include a first body side link section 125a connected to the body unit 140 and a first roller side link section 123a connected to the first roller section 122a, and the first body side link section 125a and the first roller side link section 123a may constitute a link mechanism. In this case, a link angle which is an angle formed by the first body side link section 125a and the first roller side link section 123a may be detected by a first link angle detection sensor 134a (FIG. 7) of the sensor unit 130, and a height of the first traveling unit 121a may be calculated based on the link angle.

Similarly, as shown in FIG. 2, the second traveling unit 121b may include a second body side link section 125b and a second roller side link section 123b, the third traveling unit 121c may include a third body side link section 125c and a third roller side link section 123c, and the fourth traveling unit 121d may include a fourth body side link section 125d and a fourth roller side link section 123d, and heights of the second traveling unit 121b, the third traveling unit 121c, and the fourth traveling unit 121d may be calculated by detecting a link angle formed by the second body side link section 125b and the second roller side link section 123b, a link angle formed by the third body side link section 125c and the third roller side link section 123c, and a link angle formed by the fourth body side link section 125d and the fourth roller side link section 123d by a second link angle detection sensor 134b, a third link angle detection sensor 134c, and a fourth link angle detection sensor 134d, respectively.

The robot height calculation section 164e may calculate the height of the reinforcing bar binding robot 100 from the reinforcing bar group R based on the thus calculated heights of the first traveling unit 121a, the second traveling unit 121b, the third traveling unit 121c, and the fourth traveling unit 121d (heights from the reinforcing bar group R). For example, the height of the reinforcing bar binding robot 100 may be calculated by an average value of some or all of the calculated heights of the first traveling unit 121a, the second traveling unit 121b, the third traveling unit 121c, and the fourth traveling unit 121d. For example, when the reinforcing bar binding robot 100 is positioned parallel or substantially parallel to a virtual plane formed by the reinforcing bar group R, the height of the reinforcing bar binding robot 100 may be any one of the heights of the first traveling unit 121a, the second traveling unit 121b, the third traveling unit 121c, and the fourth traveling unit 121d.

As shown in FIG. 7, the sensor unit 130 may include an inclination detection sensor 132 in addition to the first sensor 130a to the fourth sensor 130d described above. As the inclination detection sensor 132, a sensor capable of detecting an inclination angle of the reinforcing bar binding robot 100, such as a well-known inclination sensor or horizontal sensor, may be used. The sensor detection result obtaining section 162 may also obtain a detection result of the inclination detection sensor 132. For example, a posture of the reinforcing bar binding robot 100 may be determined by the posture determination section 164c of the determination section 164 based on the detection result of the inclination detection sensor 132, and the posture of the reinforcing bar binding robot 100 may be adjusted by driving a height changing motor 126 of the traveling unit 121 (a first height changing motor 126a of the first traveling unit 121a, a second height changing motor 126b of the second traveling unit 121b, a third height changing motor 126c of the third traveling unit 121c, and/or a height changing motor 126d of the fourth traveling unit 121d) by the posture control section 176 based on the determination result of the posture determination section 164c.

For example, the reinforcing bar binding robot 100 may drive the height changing motor 126 based on the detection result of the inclination detection sensor 132 such that the body unit 140 is parallel to the surface formed by the first reinforcing bars R10 and/or the second reinforcing bars R20 (also referred to as the "reinforcing bar surface" in the present embodiment). For example, if the reinforcing bar binding robot 100 is inclined in the X direction when the first reinforcing bars R10 and the second reinforcing bars R20 are arranged such that the reinforcing bar surface extends in the horizontal direction, the height of the first traveling unit 121a and the third traveling unit 121c or the second traveling unit 121b and the fourth traveling unit 121d among the first traveling unit 121a to the fourth traveling unit 121d may be changed to adjust the posture of the reinforcing bar binding robot 100.

The intersecting point calculation section 166 estimates the intersecting point c12 of the first reinforcing bar R10 and the second reinforcing bar R20 by calculating the intersecting point c12. For example, as described later, the intersecting point calculation section 166 may calculate a position of the intersecting point c12 based on the position of the first reinforcing bar R10 and the position of the second reinforcing bar R20 determined by the first reinforcing bar determination section 164a1 and the second reinforcing bar determination section 164a2. The reinforcing bar binding robot 100 may perform the binding work by the reinforcing bar binding unit 110 based on the calculated position of the intersecting point c12. Based on the estimated position of the intersecting point c12, the motor control section 178 may adjust the position of the reinforcing bar binding robot 100 by the first traveling unit 121a, the second traveling unit 121b, the third traveling unit 121c, and/or the fourth traveling unit 121d such that the reinforcing bar binding unit 110 is above the intersecting point c12.

The reinforcing bar binding unit control section 168 controls the movement of the reinforcing bar binding unit 110 by controlling a reinforcing bar binding unit movement section 168m. The reinforcing bar binding unit 110 can take a binding position where the reinforcing bar binding unit 110 performs a binding operation to bind the intersecting point c12 where the first reinforcing bar R10 and the second reinforcing bar R20 are intersected with each other, and a retracted position where the reinforcing bar binding unit 110 retracts after the binding operation is completed and moves to the intersecting point c12 where a next binding operation is performed. When moving from the retracted position to the binding position, the reinforcing bar binding unit 110 moves in a -Z direction, and when moving from the binding position to the retracted position, the reinforcing bar binding unit 110 moves in a +Z direction. Such movement of the reinforcing bar binding unit 110 in the Z direction is implemented by the reinforcing bar binding unit movement section 168m implemented by, for example, a motor. A lifting operation on the reinforcing bar binding unit 110 in the Z direction by the reinforcing bar binding unit movement section 168m is controlled by the reinforcing bar binding unit control section 168.

The reinforcing bar binding unit control section 168 also controls the binding operation at the intersecting point c12 by the reinforcing bar binding unit 110 after the reinforcing bar binding unit 110 moves to the binding position. For example, the binding work performed by the reinforcing bar binding unit 110, which is executed using a wire drawn out from the reels 180 of the wire by wire drawing sections described later, is controlled by the reinforcing bar binding unit control section 168. For example, after moving the reinforcing bar binding robot 100 by the first traveling unit 121a, the second traveling unit 121b, the third traveling unit 121c, and/or the fourth traveling unit 121d such that the reinforcing bar binding unit 110 is positioned above the intersecting point c12, the reinforcing bar binding unit control section 168 may control the reinforcing bar binding unit movement section 168m to lower the reinforcing bar binding unit 110 to the binding position to approach the intersecting point c12, and perform the binding at the intersecting point c12.

For example, the reinforcing bar following control section 170 may cause the motor control section 178 to control the traveling unit 121 to follow the first reinforcing bar R10 on which the reinforcing bar binding robot 100 is traveling, based on information such as the position of the first reinforcing bar R10 determined by the first reinforcing bar determination section 164al. For example, as shown in FIG. 5, when the reinforcing bar binding robot 100 travels on a first reinforcing bar R12 and a first reinforcing bar R14, drive motors of the traveling unit 121 (a first wheel drive motor 124a for driving the first roller section 122a, a second wheel drive motor 124b for driving the second roller section 122b, a third wheel drive motor 124c for driving the third roller section 122c, and/or a fourth wheel drive motor 124d for driving the fourth roller section 122d) may perform driving such that the reinforcing bar binding robot 100 does not separate from the first reinforcing bar R12 and the first reinforcing bar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are drive motors of the first traveling unit 121a and the third traveling unit 121c disposed at the same position or substantially the same position in the X direction, may be accelerated or decelerated with respect to the second wheel drive motor 124b and the fourth wheel drive motor 124d, which are drive motors of the second traveling unit 121b and the fourth traveling unit 121d disposed on the other side in the X direction, to adjust the position of the reinforcing bar binding robot 100 and cause the reinforcing bar binding robot 100 to travel to follow the first reinforcing bars R10.

Alternatively, the reinforcing bar following control section 170 may cause the reinforcing bar binding robot 100 to travel to follow the first reinforcing bars R10, for example, by adjusting rotation speeds of the first wheel drive motor 124a, the second wheel drive motor 124b, the third wheel drive motor 124c, and/or the fourth wheel drive motor 124d. For example, the reinforcing bar binding robot 100 can be made to flexibly follow the first reinforcing bars R10 by setting the rotation speed of one or more of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to rotation speeds different from each other.

The stop control section 172 is configured to control a stop operation of the reinforcing bar binding robot 100. For example, as will be described later, if it is determined that the reinforcing bar binding robot 100 that travels on the first reinforcing bar R12 and the first reinforcing bar R14 is present in the vicinity of an end of a first reinforcing bar R13 or approaching the end by the first reinforcing bar end determination section 164b1 and/or the second reinforcing bar end determination section 164b2 based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d and stop the reinforcing bar binding robot 100. The reinforcing bar binding robot 100 may be stopped if it is determined that the reinforcing bar binding robot 100 is present in the vicinity of an end of the first reinforcing bar R12 and/or an end of the first reinforcing bar R14, or that the reinforcing bar binding robot 100 is approaching and/or the end, not limited to the end of the first reinforcing bar R13, instead of the end, or in addition to the end.

For example, when the above intersecting point calculation section 166 calculates the intersecting point c12 of the first reinforcing bar R10 and the second reinforcing bar R20, the stop control section 172 may stop the reinforcing bar binding robot 100 to bind the intersecting point c12 by the reinforcing bar binding unit 110.

As will be described later, for example, the movement amount calculation section 174 may be configured to calculate a movement amount when the reinforcing bar binding robot 100 performs the lateral movement (movement in the X direction). For example, as described above, if the first reinforcing bar end determination section 164b1 and/or the second reinforcing bar end determination section 164b2 determine that the reinforcing bar binding robot 100 is in the vicinity of or approaching the end of the first reinforcing bar R12 and the end of the first reinforcing bar R14, the reinforcing bar binding robot 100 completes the reinforcing bar binding work at the intersecting point c12 on the first reinforcing bar R13 disposed between the first reinforcing bar R12 and the first reinforcing bar R14, moves to other first reinforcing bars R10, and starts the reinforcing bar binding work at the intersecting point c12.

For example, when the reinforcing bar binding robot 100 completes the reinforcing bar binding work at the intersecting point c12 on the first reinforcing bar R13 and then performs the reinforcing bar binding work at the intersecting point c12 on the first reinforcing bar R14, the reinforcing bar binding robot 100 moves in the X direction by one interval with respect to intervals between the first reinforcing bars R10 in the X direction. In this case, the movement amount calculation section 174 may calculate the movement amount based on the interval between the adjacent first reinforcing bars R10 in the X direction based on the information on the positions of the first reinforcing bars R10 determined by the first reinforcing bar determination section 164a1. Similarly, when the reinforcing bar binding robot 100 performs the reinforcing bar binding work at the intersecting points c12 on the two or more separated first reinforcing bars R10 in the X direction, the movement amount may be calculated based on the interval between the first reinforcing bars R10. The lateral movement (for example, horizontal movement) of the body unit 140 by the lateral movement unit 146 during the lateral movement may be performed based on the calculated movement amount. The movement amount calculation section 174 may calculate a movement amount in a direction other than the lateral movement amount. For example, the movement amount calculation section 174 may calculate a movement amount of vertical movement (movement in the first direction or Y direction) of the reinforcing bar binding robot 100 based on the detection results of the sensors 130, the determination results of the reinforcing bar end determination section 164b1 and/or the reinforcing bar end determination section 164b2, and the like.

For example, a camera capable of capturing a two-dimensional image or a three-dimensional image may be used as the sensor unit 130, and a position of a foreign matter may be determined by, for example, the obstacle determination section 164d of the determination section 164 based on the detection result of the sensor unit 130. In a construction site or the like where reinforcing bars are assembled, for example, a tool or the like may be left or a worker may work on a reinforcing bar surface. These may be detected as foreign matters based on the detection results of the sensor unit 130, and the foreign matter detour control section 179 may be configured to drive the first wheel drive motor 124a, the second wheel drive motor 124b, the third wheel drive motor 124c, and/or the fourth wheel drive motor 124d by the motor control section 178 to detour the foreign matter based on the detection result of the foreign matter. Alternatively, the reinforcing bar binding robot 100 may be configured to detour the foreign matter by performing the lateral movement described later.

The control unit 160 is, for example, a processor such as a central processing unit (CPU) corresponding to a calculation section, and is a control section that performs control related to execution of a computer program stored in the storage device 198, calculation of data, and processing. The processor is a calculation section that executes a program for executing operations (reinforcing bar following and traveling, lateral movement (for example, horizontal movement), reinforcing bar binding work, and the like) of the reinforcing bar binding robot 100 using detection data and the like. By executing the program stored in the storage device 198, the processor implements each unit of the control unit (for example, the sensor detection result obtaining section 162).

The storage device 198 may include, for example, a random access memory (RAM) and a read only memory (ROM). The RAM is a part of the storage unit in which data can be rewritten, and may be implemented by, for example, a semiconductor storage element. The RAM may store a program executed by the processor and data necessary for executing the program (for example, data and the like of a template used for determining the position of the reinforcing bar based on the detection result of the sensor unit 130 as described later). Note that these are examples, and other data may be stored in the RAM, or some of these may not be stored.

The ROM is a part of the storage unit from which data can be read, and may be implemented by, for example, a semiconductor storage element. The ROM may store, for example, a program executed by the control unit 160 and data that is not rewritten.

The program executed by the control unit 160 may be provided by being stored in a computer-readable storage medium such as the storage device 198 (for example, RAM or ROM), or may be provided via a communication network connected by a communication section (not shown) when the reinforcing bar binding robot 100 according to the present embodiment includes the communication section.

A physical configuration described above is an example, and in the reinforcing bar binding robot 100 according to the embodiment of the present disclosure, the control unit 160 and the storage device 198 may not necessarily be independent of each other. For example, the reinforcing bar binding robot 100 may include a large-scale integration (LSI) in which a processor and a memory are integrated. The reinforcing bar binding robot 100 may include a graphical processing unit (GPU) as the control unit 160, and various operations described above may be implemented by the GPU executing a program.

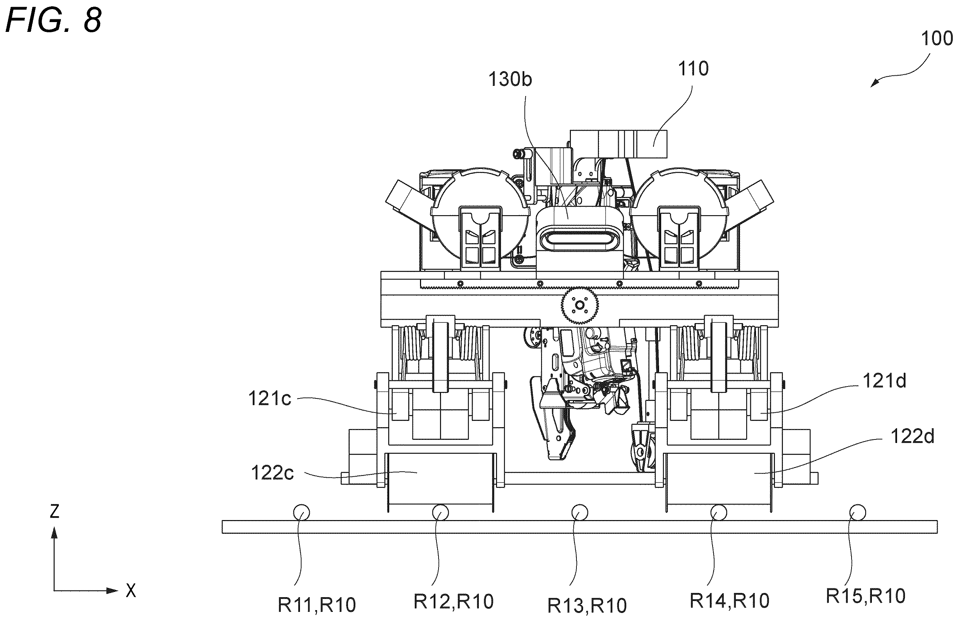

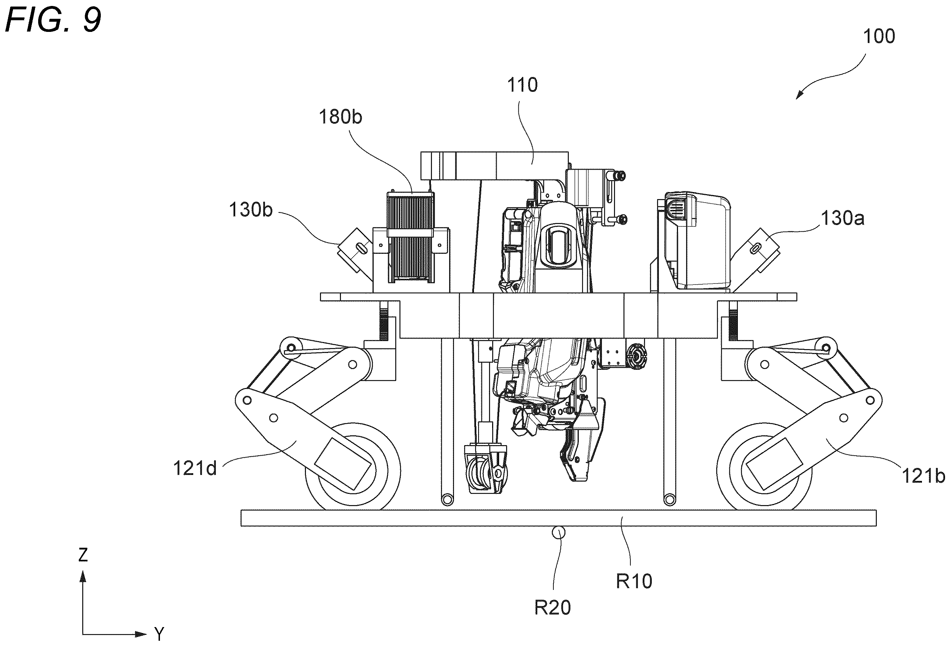

Next, a traveling operation on the reinforcing bars by the reinforcing bar binding robot 100 will be described with reference to FIGS. 8 and 9. FIG. 8 is a diagram of the reinforcing bar binding robot 100 being traveling along the first reinforcing bars R10, as viewed from the Y direction (-Y direction). FIG. 9 is a diagram of the reinforcing bar binding robot 100 being traveling along the first reinforcing bars R10, as viewed from the X direction (+X direction). In FIGS. 8 and 9, the reinforcing bar binding robot 100 travels in the first direction (Y direction). As shown in FIGS. 8 and 9, during the traveling, the reinforcing bar binding robot 100 travels such that the third roller section 122c of the third traveling unit 121c is on the first reinforcing bar R12 and the fourth roller section 122d of the fourth traveling unit 121d is on the first reinforcing bar R14. As shown in FIG. 9, the second roller section 122b of the second traveling unit 121b also travels on the first reinforcing bar R14, similarly to the fourth roller section 122d of the fourth traveling unit 121d. Although not shown in FIGS. 8 and 9, the first roller section 122a of the first traveling unit 121a also travels on the first reinforcing bar R12, similarly to the third roller section 122c of the third traveling unit 121c. Accordingly, when the reinforcing bar binding robot 100 according to the embodiment of the present disclosure travels along the first reinforcing bars R10, for example, the reinforcing bar binding robot 100 travels on the certain first reinforcing bar R10 (first reinforcing bar R12) and the certain first reinforcing bar R10 (first reinforcing bar R14) disposed two reinforcing bars away from the first reinforcing bar R12, and binds the intersecting point c12 of the first reinforcing bar R10 and the second reinforcing bar R20 present on the first reinforcing bar R13, which is the first reinforcing bar R10 present between the traveled first reinforcing bar R12 and the traveled first reinforcing bar R14.

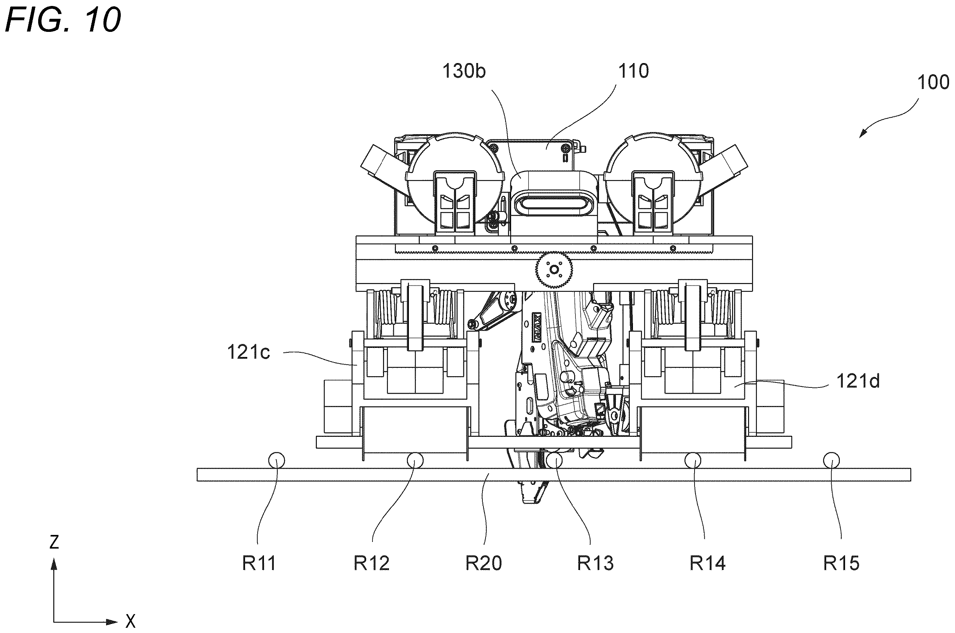

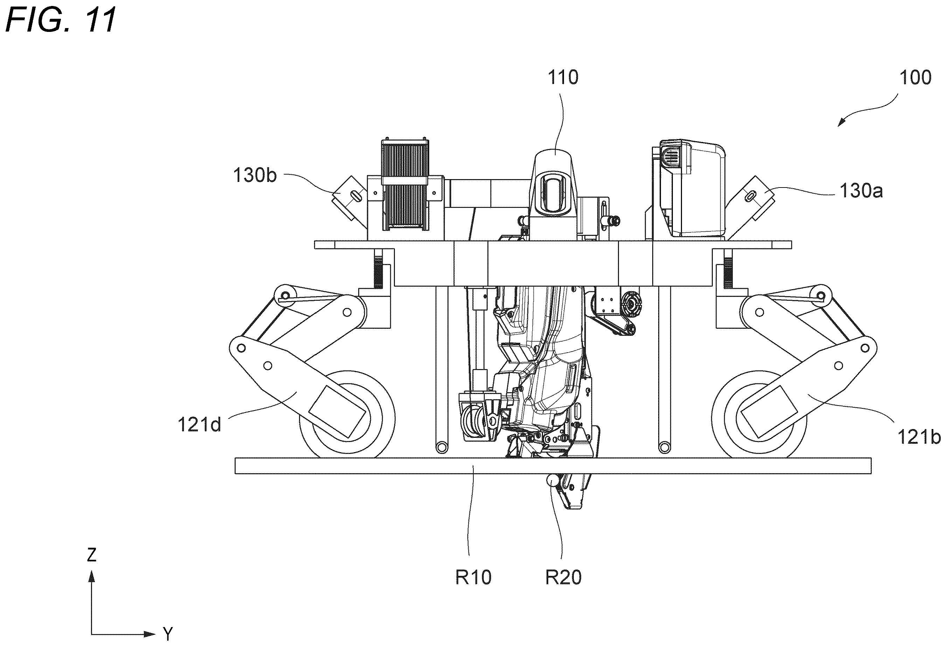

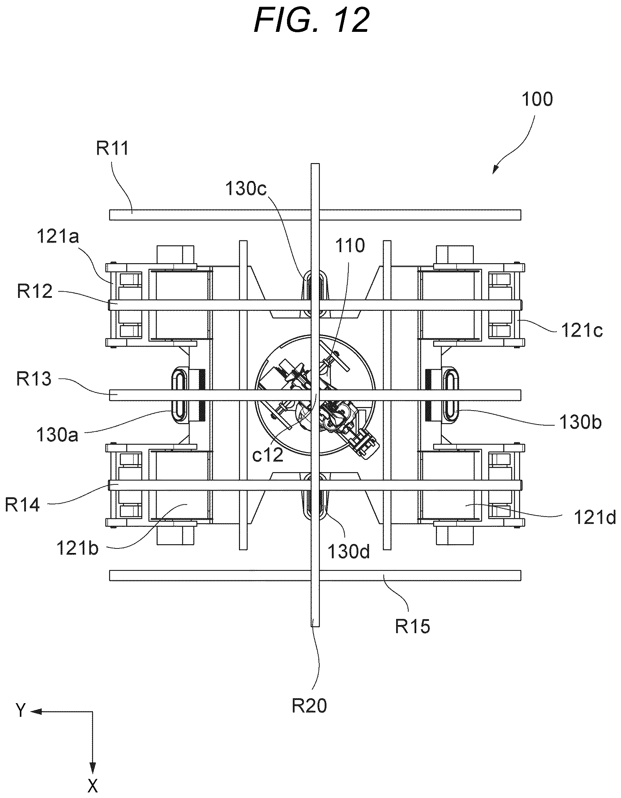

Next, the reinforcing bar binding robot 100 during the reinforcing bar binding work will be described with reference to FIGS. 10, 11, and 12. FIG. 10 is a diagram of the reinforcing bar binding robot 100 that stops traveling and performs the binding work, as viewed from the Y direction (-Y direction). FIG. 11 is a diagram of the reinforcing bar binding robot 100 that performs the binding work, as viewed from the X direction (+X direction). FIG. 12 is a diagram of the reinforcing bar binding robot 100 that performs the binding work, as viewed from below in the Z direction (-Z direction). FIGS. 10, 11, and 12 show an example in which the reinforcing bar binding robot 100 binds the intersecting point c12 of the first reinforcing bar R13 and the second reinforcing bar R20. When performing the binding work, the reinforcing bar binding robot 100 stops the traveling (FIG. 10) and lowers the reinforcing bar binding unit 110 to perform the binding (FIGS. 11 and 12).

Here, a mechanism for raising and lowering the reinforcing bar binding unit 110 in the Z direction with respect to the body unit 140 and an operation in a case where the reinforcing bar binding unit 110 is lowered will be described in detail.

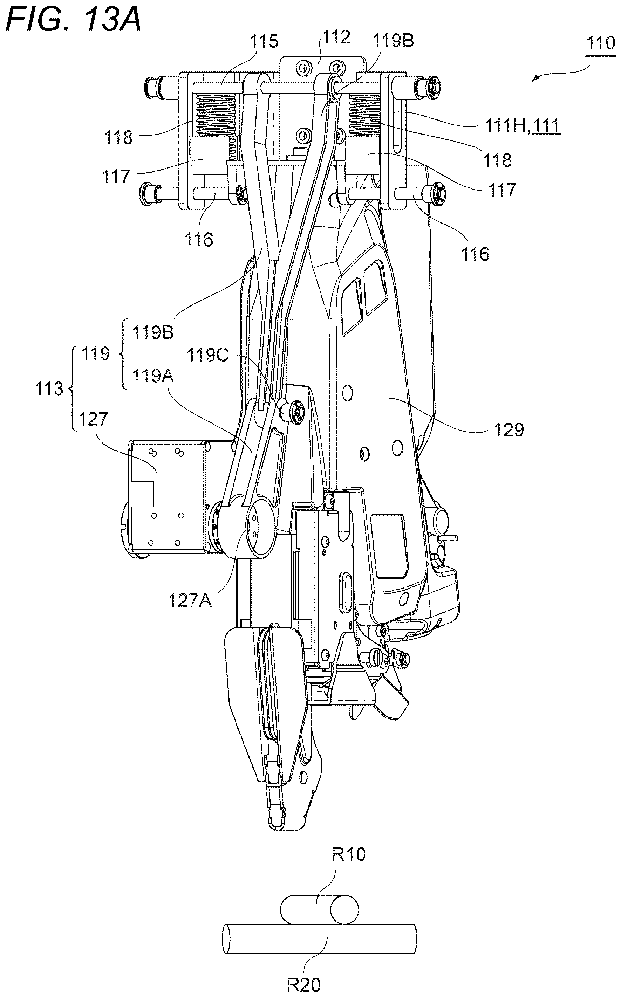

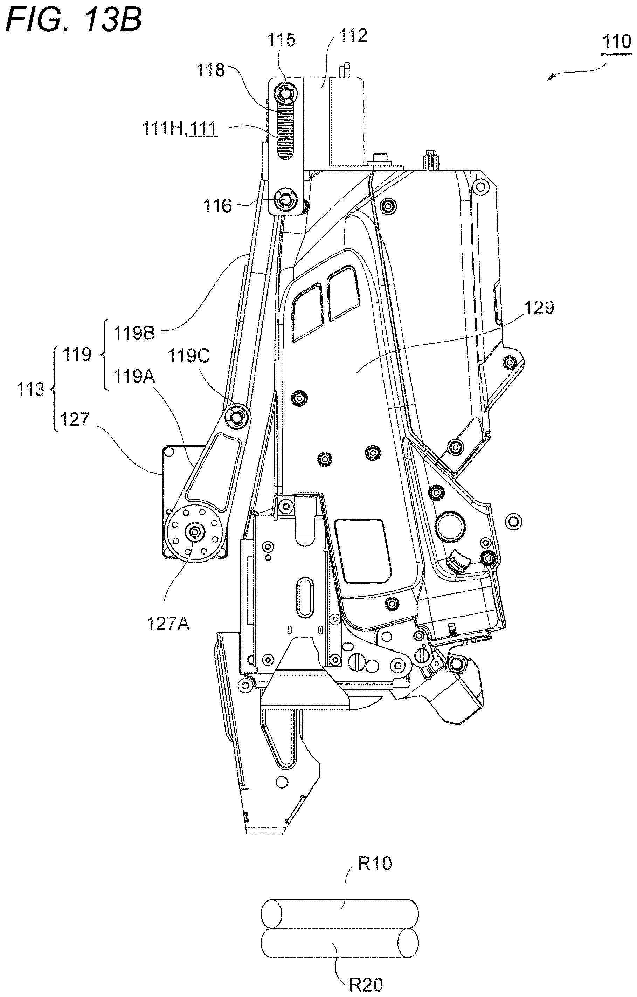

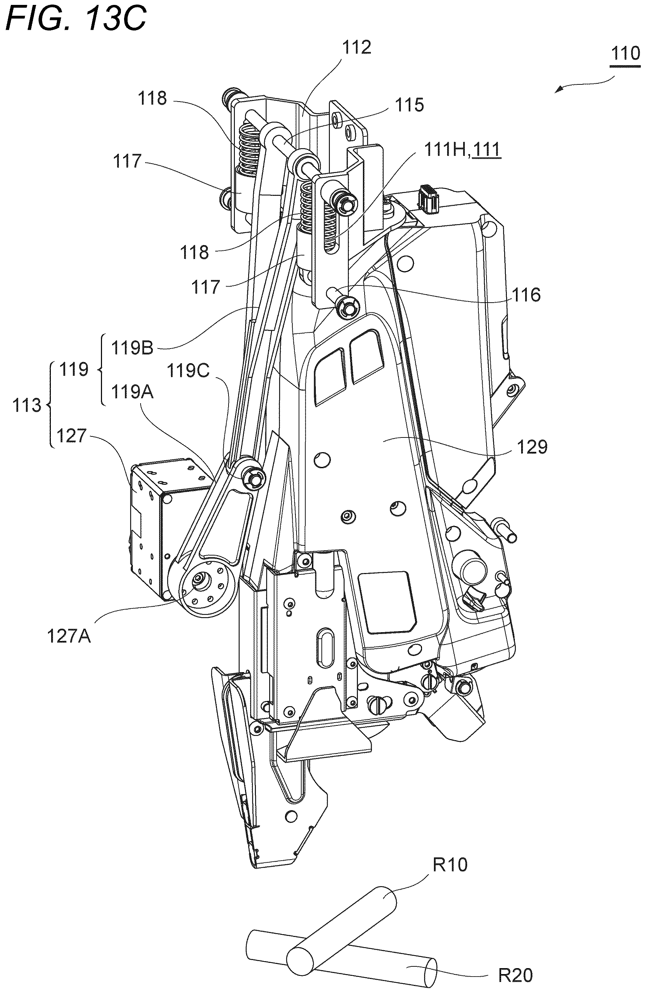

FIGS. 13A, 13B, and 13C are perspective views of the reinforcing bar binding unit 110 in a state where the reinforcing bar binding unit 110 is retracted upward (also referred to as a "standby state"), as viewed from a side and a top.

As shown in these drawings, the reinforcing bar binding robot 100 includes a lifting mechanism 113 (an example of a "lifting section") for raising and lowering, with respect to the body unit 140, the reinforcing bar binding unit 110 which includes a binding section 129 for binding reinforcing bars and a holding section 112 for holding the binding section 129. The lifting mechanism 113 includes a connecting section 119 connected to the holding section 112 of the reinforcing bar binding unit 110, and a driving section 127 for moving the connecting section 119. The connecting section 119 includes an engaging section (for example, a movable shaft 115) for engaging with the holding section 112, while the holding section 112 includes an engaged section (for example, a hole 111) for engaging with the engaging section (for example, the movable shaft 115). In such a configuration, when the driving section 127 drives the connecting section 119 in a state where the binding section 129 abuts against the reinforcing bar R10, the engaging section (for example, the movable shaft 115) of the connecting section 119 can be moved with respect to the binding section 129, whose movement is restricted by the reinforcing bar R10, thereby releasing the engagement between the engaged section (for example, the hole 111) of the holding section 112 and the engaging section (for example, the movable shaft 115). That is, the control unit 160 (an example of a "control section") of the reinforcing bar binding robot 100 is configured to perform a first operation of lowering the holding section 112 and the engaging section (for example, the movable shaft 115) together to cause the binding section 129 to abut against the reinforcing bar R10 in a state where the holding section 112 and the engaging section (for example, the movable shaft 115) are engaged, and a second operation of moving the engaging section (for example, the movable shaft 115) with respect to the holding section 112 to release the engagement between the holding section 112 and the engaging section (for example, the movable shaft 115) in the state where the binding section 129 abuts against the reinforcing bar R10. Such a hole 111 is also referred to as a position restricting section because the hole 111 restricts movement of the holding section 112 in an intersecting direction intersecting with a lifting direction of the holding section 112 when the engaging section is in an engagement position for engagement, and allows the movement of the holding section 112 in the intersecting direction when the engaging section is in a position reached from the engagement position.

Hereinafter, a specific configuration will be described.

The reinforcing bar binding unit 110, which is raised and lowered by the lifting mechanism 113, includes the binding section 129, which is a section corresponding to a lower end of the reinforcing bar binding unit 110, has the wire twisting section 114 for twisting a wire for binding the reinforcing bars, and is configured to perform the reinforcing bar binding work, and the holding section 112, which is a section corresponding to an upper part of the binding section 129 of the reinforcing bar binding unit 110, holds the binding section 129, and is equipped with known components for performing the reinforcing bar binding work. The holding section 112 is provided by extending in the up-down direction, and is connected to the connecting section 119 at an upper end, for example.

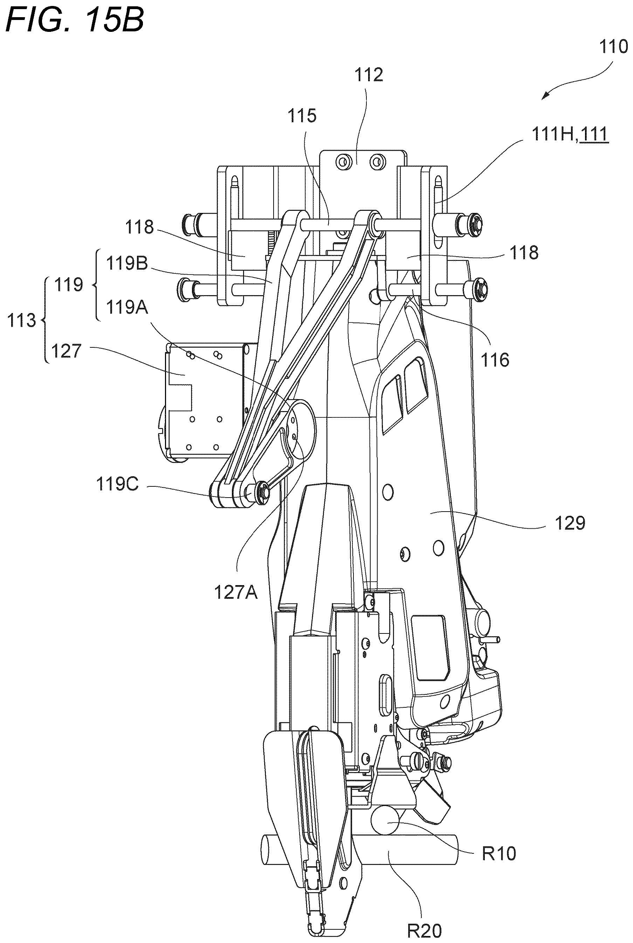

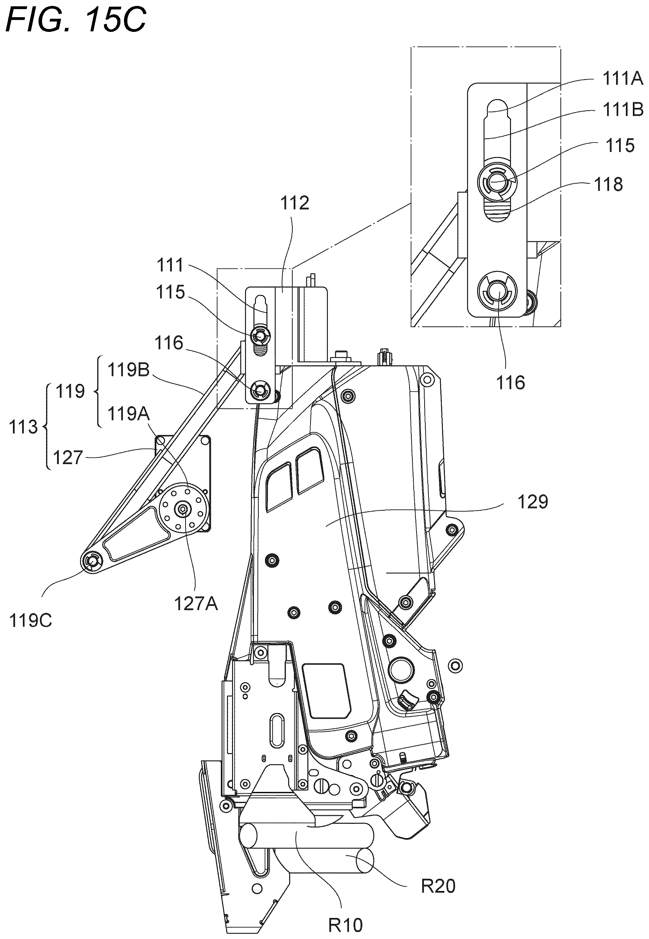

Here, the holding section 112 has the engaged section (connected section) for engaging with (connecting to) the connecting section 119. The holding section 112 in the present embodiment includes, as the engaged section, the hole 111 formed with a long hole 111H for engaging with (connecting to) the movable shaft 115 of the connecting section 119. As shown in FIG. 15C described later, the hole 111 includes a first hole 111A which is formed in an arc or semicircle having a diameter equal to or slightly larger than a shaft diameter (diameter) of the movable shaft 115 and is provided at an upper end of the long hole 111H, and a wide second hole 111B which is provided below the first hole 111A and continues to the first hole 111A, expands to have a width larger than the diameter of the arc or semicircle that forms an upper end, and extends in the up-down direction. The width of the second hole 111B is, for example, 110% or more and 150% or less of the diameter of the arc approximating the first hole 111A.

According to such a configuration, in a state where the movable shaft 115 is engaged to the first hole 111A, the movable shaft 115 is inserted into the first hole 111A with almost no gap, and the movement in the horizontal direction of the holding section 112 is restricted.

On the other hand, in a state where the movable shaft 115 moves downward relative to the holding section 112 and the engagement state with the hole 111 (first hole 111A) is released, the movable shaft 115 is inserted through the second hole 111B with a gap, and thus the movement of the holding section 112 in the horizontal direction is relatively mitigated and the holding section 112 is configured to move in the horizontal direction within a range equal to or smaller than a size of the gap.

Therefore, as described below, it is possible to restrict the movement of the holding section 112 in the horizontal direction in accordance with a relative position of the movable shaft 115 in the long hole 111H provided in the holding section 112.

However, the first hole 111A may have a gap (first gap) with the movable shaft 115, and the second hole 111B may have a gap (second gap) with the movable shaft 115, which is larger than the first gap.

The long hole 111H may be formed in a shape that becomes wider as the long hole progresses downward (for example, a tapered shape).

In the present embodiment, the holding section 112 has a pair of holes 111 at both ends of the movable shaft 115 in a shaft direction, and each of the holes 111 has the long hole 111H formed therein that engages with the movable shaft 115.

The holding section 112 further includes fixed shafts 116 for fixing plate-like members in which the holes 111 are formed. As shown in FIGS. 13A and 13B, the fixed shafts 116 according to the present embodiment are implemented by a pair of cylindrical pins fixed to a part of the holding section 112 at ends.

The connecting section 119 is a member that is connected to the holding section 112 to raise and lower the reinforcing bar binding unit 110 and is driven by the driving section 127. The connecting section 119 according to the present embodiment includes the movable shaft 115 for engaging with the holes 111 that are the engaged sections of the holding section 112, a second link member 119B in which a pair of holes for connecting the movable shaft 115 are formed, a first link member 119A that is rotated and driven by the driving section 127 by connecting to an output shaft 127A of the driving section 127, and a pin member 119C that pivotably connects the second link member 119B and the first link member 119A.

Therefore, a first end of the second link member 119B in a longitudinal direction is pivotably connected to the movable shaft 115, and a second end of the second link member 119B in the longitudinal direction is pivotably connected to a first end of the first link member 119A via the pin member 119C. A second end in the longitudinal direction of the first link member 119A, which has the first end pivotably connected to the second end of the second link member 119B in the longitudinal direction, is connected to the output shaft 127A of the driving section 127.

Therefore, the first link member 119A of the connecting section 119 rotates about the output shaft 127A along with rotational drive of the output shaft 127A of the driving section 127. Therefore, the second end of the second link member 119B connected to the first end of the first link member 119A moves on a circumference having the output shaft 127A as the center and having a length of the first link member 119A as a diameter.

The movable shaft 115 is a member that can move (movable) relative to the engaged section to engage with the engaged sections (long holes 111H) provided in the holding section 112 and release the engagement state. The movable shaft 115 of the present embodiment is a pin formed in a cylindrical shape extending in the horizontal direction to penetrate each of the long holes 111H of the pair of holes 111 provided apart from each other in the horizontal direction perpendicular to the up-down direction (Z-axis direction). Therefore, the movable shaft 115 is provided to penetrate each of the long holes 111H of the pair of hole portions 111 at both ends, and penetrate each of the pair of holes formed in the second link member 119B in an area sandwiched between the pair of long holes 111H.

While the holding section 112 is constantly subjected to a downward force due to the gravity, the movable shaft 115 is inserted through the long holes 111H of the holes 111 provided in the holding section 112. Therefore, in the standby state, the movable shaft 115 supports the holding section 112 while being engaged to the first holes 111A corresponding to upper end edges of the long holes 111H.

The second link member 119B is a member formed in a link shape that is provided extending in the up-down direction in the standby state, and has a base end connected to the pin member 119C, and tip ends extending from the base end and branching into two branches, and in the tip ends, holes through which the movable shaft 115 penetrates are formed.

The pin member 119C pivotably connects the second link member 119B and the first link member 119A. Therefore, in the state, an angle between the second link member 119B and the first link member 119A varies depending on the state. As shown in the drawing, in the standby state, the second link member 119B and the first link member 119A extend linearly in the same direction, that is, approximately up-down direction. Therefore, the movable shaft 115B supported by the second link member 119B at the tip ends of the second link member 119B is located at a position farthest from the output shaft 127A of the driving section 127.

The first link member 119A is configured to rotate in accordance with the rotation of the output shaft 127A by being connected to the output shaft 127A of the driving section 127.

The driving section 127 is a motor that is powered by, for example, the battery 182 and controlled by the motor control section 178.

The reinforcing bar binding robot 100 according to the present embodiment further includes spring members 118, which are compression springs, as biasing sections configured to bias the movable shaft 115, which is the engaging section, upward to engage with the first holes 111A of the holes 111, which are the engaged sections. In the present embodiment, the spring members 118 are supported from below by spring receiving sections 117 fixed to the holding section 112, and are inserted between the movable shaft 115 and the spring receiving sections 117. Therefore, in the standby state, the movable shaft 115 is biased upward to abut against the holes 111, which are the engaged sections. Note that the reinforcing bar binding robot 100 according to the present embodiment includes a pair of spring members 118 and a pair of spring receiving sections 117 to bias both ends of the movable shaft 115, respectively. Each of the spring members 118 functions as an elastic section configured to reduce a movement speed of the holding section 112 in a lowering direction by being compressed between the movable shaft 115 and the spring receiving section 117 fixed to the holding section 112 along with the downward movement of the movable shaft 115. In other words, the spring member 118 reduces or lowers the movement speed of the holding section 112 in the lowering direction. That is, the spring member 118 reduces or lowers the movement speed of the holding section 112 compared with a movement speed of the movable shaft 115.

In the above configuration, the reinforcing bar binding unit 110 travels on the first reinforcing bar R10 while waiting above. When the reinforcing bar binding robot 100 reaches the intersecting point c12 of the first reinforcing bar R10 and the second reinforcing bar R20, the reinforcing bar binding unit 110 is lowered to bind the intersecting point c12. Next, an operation for lowering the reinforcing bar binding unit 110 in the above configuration will be described.

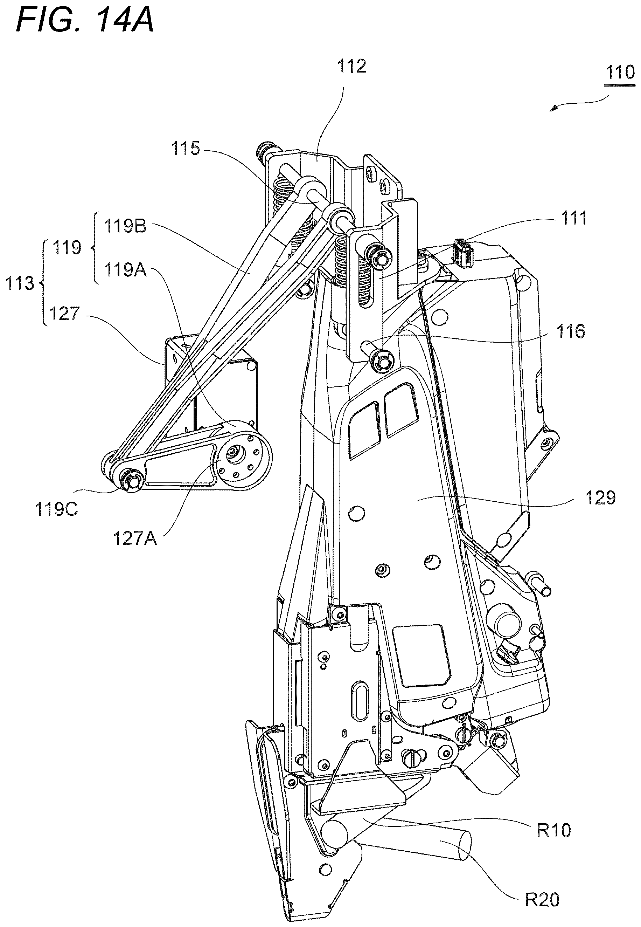

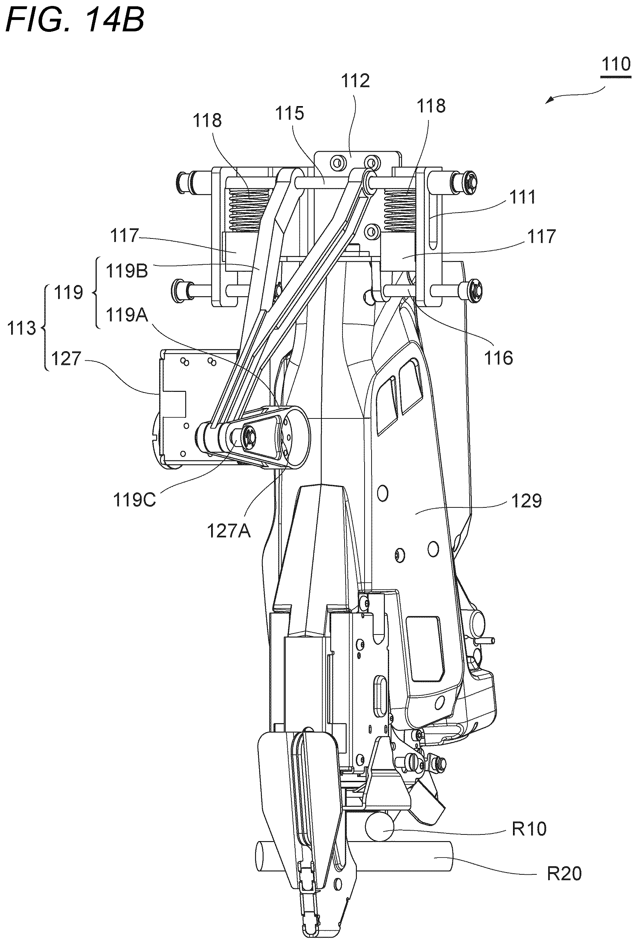

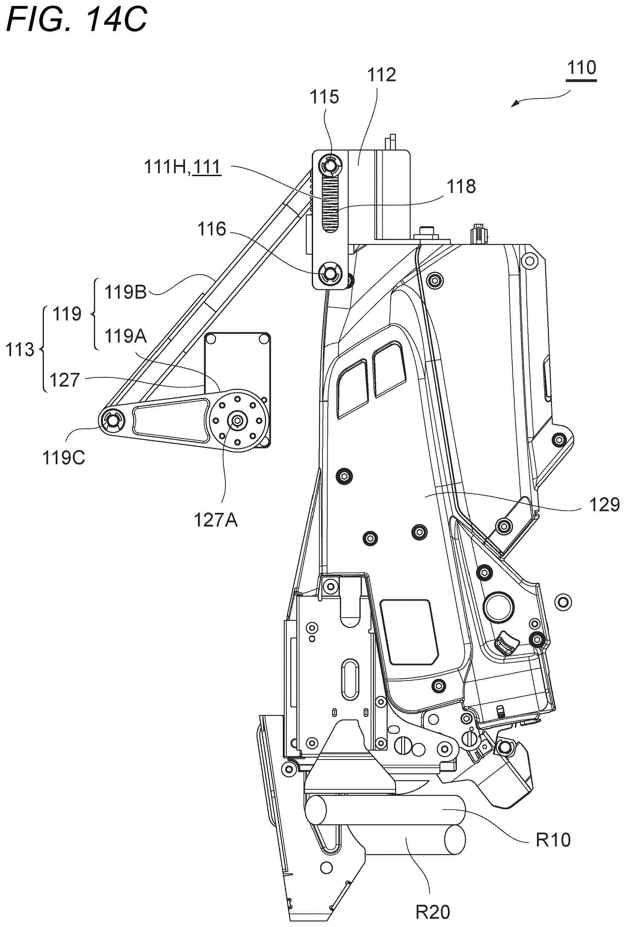

FIG. 14A to FIG. 14C are perspective views and side views showing a state immediately after the reinforcing bar binding unit 110 starts to lower and abuts against the first reinforcing bar R10.

As shown in these drawings, in order for the reinforcing bar binding unit 110 to lower in the Z direction, the motor control section 178 first rotates the output shaft 127A of the driving section 127. Then, at an initial stage of rotation of the output shaft 127A of the driving section 127, the first link member 119A pivots about the second end of the first link member 119A connected to the output shaft 127A of the driving section 127. As the first link member 119A pivots, the first end of the second link member 119B connected to the first end of the first link member 119A starts to move downward from an upper position in the standby state. Therefore, the movable shaft 115 connected to the first end of the second link member 119B also starts the downward movement.

Along with the downward movement of the movable shaft 115, the holding section 112 supported by the movable shaft 115 also starts the downward movement. In this case, the movable shaft 115 performs a first operation of lowering together with the holding section 112 while supporting the holding section 112 in a state where the movable shaft 115 is engaged to the first holes 111A corresponding to the upper end edges of the long holes 111H.

As shown in FIG. 14A to FIG. 14C, when the reinforcing bar binding unit 110 lowers and the binding section 129 abuts against the first reinforcing bar R10, the first link member 119A and the second link member 119B form an acute angle.

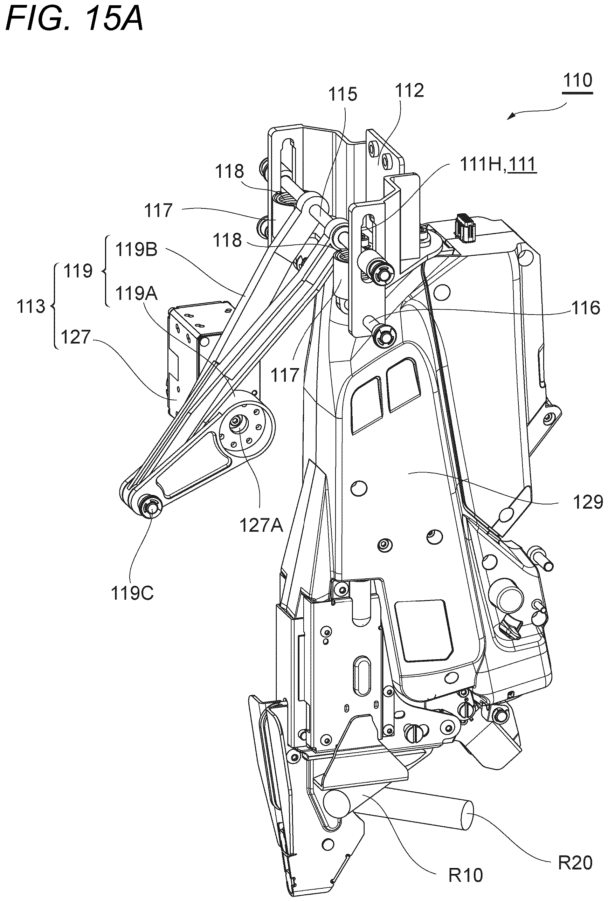

Next, a second operation after the binding section 129 of the reinforcing bar binding unit 110 abuts against the first reinforcing bar R10 will be described. FIGS. 15A to 15C are perspective views and side views illustrating the second operation after the binding section 129 abuts against the first reinforcing bar R10.

The motor control section 178 of the reinforcing bar binding unit 110 further rotates the output shaft 127A of the driving section 127. Therefore, the first end of the first link member 119A moves further on the circumference centered on the output shaft 127A of the driving section 127. Along with the movement of the first end of the first link member 119A, the second end of the second link member 119B tries to move further downward. Along with the downward movement of the movable shaft 115, the holding section 112 supported by the movable shaft 115 also tries to move downward. However, since the binding section 129 abuts against the first reinforcing bar R10, the holding section 112 does not move downward together with the movable shaft 115, but presses the first reinforcing bar R10 downward.

Therefore, in the holding section 112 and the movable shaft 115, only the movable shaft 115 moves downward. Therefore, the movable shaft 115 moves downward with respect to the holes 111 of the holding section 112. As a result, the movable shaft 115 moves from the first holes 111A to the second holes 111B, and the engagement between the movable shaft 115 and the holes 111 (first holes 111A) is released. As a result, the engagement state is released, and thus the holding section 112 is allowed to move in the horizontal direction within the range of the gap between the movable shaft 115 and the second holes 111B. Therefore, when the movable shaft 115 is positioned at the second holes 111B, the binding section 129 is supported to be swingable around the fixed shaft 116. In this case, the movable shaft 115 moves further downward, and thus the first link member 119A and the second link member 119B form an even smaller acute angle than that when the binding section 129 abuts against the first reinforcing bar R10.

Accordingly, in the second operation, the engagement between the holding section 112 and the movable shaft 115 can be released by moving the movable shaft 115 relative to the holding section 112 in the state where the binding section 129 abuts against the first reinforcing bar R10. By releasing the engagement between the holding section 112 and the movable shaft 115, the movement of the holding section 112 and the binding section 129 in the horizontal direction (intersecting direction) is allowed or mitigated. Therefore, even if the binding section 129 slightly deviates from the intersecting point c12, the binding section 129 moves in the horizontal direction to follow the first reinforcing bar R10 or the second reinforcing bar R20 during the binding operation, and it becomes possible to perform the binding operation while the binding section 129 moves to approach the intersecting point c12. Therefore, compared with a reinforcing bar binding machine in which the binding section cannot move in the horizontal direction by any means after abutting against the reinforcing bars and therefore binding must be performed in an undetermined binding position (the intersecting point of the reinforcing bars), it becomes possible to accurately dispose the binding section 129 at the desired position and stabilize the position of the binding section 129 when the binding section 129 abuts against the reinforcing bars.

When the movable shaft 115 is biased by the spring members 118, the movable shaft 115 moves downward against a biasing force from the spring members 118. Therefore, it becomes possible to bind the reinforcing bars R10 in a state where the reinforcing bars R10 are pressed by a force greater than the gravity of the holding section 112 from the spring members 118 via the holding section 112.

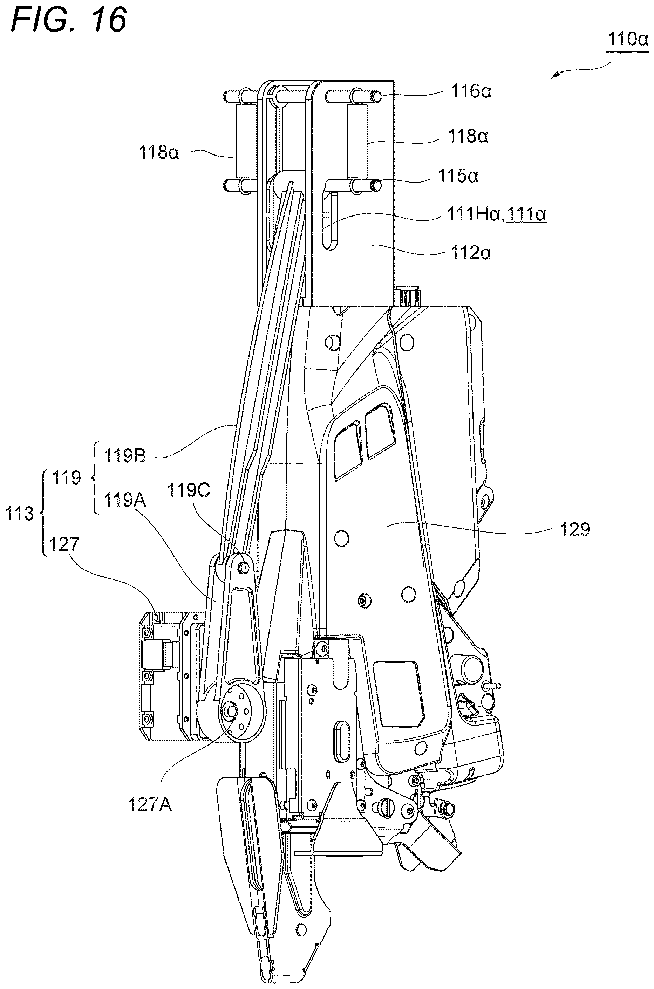

A case where the compression springs are provided as the spring members 118 between the movable shaft 115 and the fixed shaft 116 is described above as an example, but the present invention is not limited thereto, and various modifications of the present invention within the scope of the ordinary creative ability of a person skilled in the art are possible. For example, a tension spring may be provided instead of the compression spring. FIG. 16 shows a modification of the reinforcing bar binding device 100 in which tension springs 118α are provided as the spring members 118. As shown in the drawing, a fixed shaft 116α may be provided above the movable shaft 115α inserted into holes 111α (long holes 111Hα), and the tension springs 118α may be inserted between the fixed shaft 116α and the movable shaft 115α.

In such a modification, the same effect as in the present embodiment can also be achieved by moving the movable shaft 115α downward against a biasing force of the tension springs 118α after the reinforcing bar binding unit 110 abuts against the reinforcing bar.

The above-described embodiments are provided to facilitate understanding of the present invention, and are not intended to limit the present invention. The present invention may be modified/improved without departing from the spirit of the present invention, and equivalents thereof are also included in the present invention. That is, design changes added to the embodiments by a person skilled in the art as appropriate are also included within the scope of the present invention as long as the design changes include the characteristics of the present invention. For example, elements, and arrangements, materials, conditions, shapes, sizes, and the like of the elements of the embodiments are not limited to those shown as examples, and can be changed as appropriate. The embodiments are merely examples, and it goes without saying that partial replacement or combination of the configurations shown in different embodiments is possible, and these are also included within the scope of the present invention as long as the characteristics of the present invention are included.

The present application is based on Japanese Patent Application No. 2023-007172 filed on January 20, 2023, Japanese Patent Application No. 2023-007174 filed on January 20, 2023, Japanese Patent Application No. 2023-007176 filed on January 20, 2023, Japanese Patent Application No. 2023-007177 filed on January 20, 2023, Japanese Patent Application No. 2023-007182 filed on January 20, 2023, Japanese Patent Application No. 2023-007187 filed on January 20, 2023, and Japanese Patent Application No. 2023-130997 filed on August 10, 2023, and the contents of which are incorporated in the present application by reference.

### INDUSTRIAL APPLICABILITY

The reinforcing bar binding device according to the present disclosure can accurately dispose a binding mechanism at a desired position and stabilize a position of the binding mechanism when the binding mechanism abuts against a reinforcing bar.

### REFERENCE SIGNS LIST

100 Reinforcing bar binding robot
110 Reinforcing bar binding unit
111 Hole
111H Long hole
111A First hole
111B Second hole
112 Holding section
113 Lifting mechanism
115 Movable shaft
115α Movable shaft
116 Fixed shaft
116α Fixed shaft
117 Spring receiving section
118 Spring member
119 Connecting section
119A First link member
119B Second link member
119C Pin member
127 Driving section
127A Output shaft

## Claims

1. A reinforcing bar binding device comprising:
a binding section configured to bind a reinforcing bar;
a holding section configured to hold the binding section; and
a lifting section configured to raise and lower the holding section with respect to a body section,
wherein the lifting section includes:
a connecting section connected to the holding section; and
a driving section configured to move the connecting section,
wherein the connecting section includes an engaging section,
wherein the holding section includes an engaged section configured to engage with the engaging section, and
wherein the driving section is configured to move the connecting section in a state where the binding section abuts against the reinforcing bar, and move the engaging section relative to the engaged section to release engagement between the engaging section and the engaged section.

2. The reinforcing bar binding device according to claim 1, further comprising:
a biasing section configured to bias the engaging section in a direction to engage with the engaged section.

3. The reinforcing bar binding device according to claim 1,
wherein the driving section is configured to: move the connecting section to a position where the binding section abuts against the reinforcing bar; and further move the connecting section to release the engagement between the engaging section and the engaged section.

4. The reinforcing bar binding device according to claim 1, further comprising:
a detection section configured to detect abutment of the binding section against the reinforcing bar,
wherein the driving section releases the engagement between the engaging section and the engaged section on a condition that the detection section detects the abutment of the binding section against the reinforcing bar.

5. The reinforcing bar binding device according to claim 1, further comprising:
a guiding section configured to guide the connecting section along a lifting direction of the holding section.

6. The reinforcing bar binding device according to claim 5,
wherein the engaged section is formed in an elongated hole, and
wherein the engaged section includes:
a first hole with which the engaging section engages; and
a second hole that communicates with the first hole and has a width dimension larger than the first hole in a direction intersecting with the lifting direction of the holding section.

7. The reinforcing bar binding device according to claim 6, further comprising:
a guided section configured to be guided by the guiding section,
wherein the binding section is supported to be swingable about the guided section when the engaging section is positioned in the second hole.

8. A reinforcing bar binding device comprising:
a binding section configured to bind a reinforcing bar;
a holding section configured to hold the binding section;
a lifting section configured to raise and lower the holding section with respect to a body section; and
an elastic section configured to attenuate a movement speed of the holding section in a lowering direction,
wherein the elastic section attenuates the movement speed of the holding section in the lowering direction only in a state where the binding section abuts against the reinforcing bar.

9. A reinforcing bar binding device comprising:
a binding section configured to bind a reinforcing bar;
a holding section configured to hold the binding section;
a connecting section connected to the holding section; and
a control section configured to control raising and lowering of the holding section and the binding section by driving the connecting section,
wherein the connecting section includes an engaging section configured to engage with the holding section, and
wherein the control section is configured to perform:
a first operation of lowering both the holding section and the engaging section while the holding section and the engaging section are engaged, thereby causing the binding section to contact the reinforcing bar; and
a second operation of moving the engaging section relative to the holding section to release engagement between the holding section and the engaging section in a state where the binding section abuts against the reinforcing bar.

10. The reinforcing bar binding device according to claim 9, further comprising:
a biasing section configured to bias the engaging section in a direction to engage with the holding section.

11. The reinforcing bar binding device according to claim 10,
wherein the holding section is provided with a position restricting section configured to restrict movement of the holding section in an intersecting direction intersecting with a lifting direction of the holding section when the engaging section is positioned at an engagement position for engagement with the holding section, and to allow the movement of the holding section in the intersecting direction when the engaging section has moved to a position away from the engagement position.

12. A reinforcing bar binding device comprising:
a binding section configured to bind a reinforcing bar;
a holding section configured to hold the binding section;
a lifting section configured to raise and lower the holding section with respect to a body section; and
an elastic section configured to reduce a movement speed of the holding section in a lowering direction,
wherein the elastic section reduces the movement speed of the holding section in the lowering direction only in a state where the binding section abuts against the reinforcing bar.
